(19) Europäisches Patentamt
European Patent Office
Office européen des brevets

(11) **EP 4 233 208 B1**

(12) **EUROPÄISCHE PATENTSCHRIFT**

(45) Veröffentlichungstag und Bekanntmachung des Hinweises auf die Patenterteilung:
**27.08.2025   Patentblatt 2025/35**

(21) Anmeldenummer: **21794552.6**

(22) Anmeldetag: **18.10.2021**

(51) Internationale Patentklassifikation (IPC):
**H04B 10/114** *(2013.01)*     **G08C 23/04** *(2006.01)*

(52) Gemeinsame Patentklassifikation (CPC):
**H04B 10/1141; G08C 23/04; H04B 10/1149**

(86) Internationale Anmeldenummer:
**PCT/EP2021/078842**

(87) Internationale Veröffentlichungsnummer:
**WO 2022/084264 (28.04.2022 Gazette 2022/17)**

(54) **SYSTEM UND VERFAHREN ZUR OPTISCHEN KOMMUNIKATION**

SYSTEM AND METHOD FOR OPTICAL COMMUNICATION

SYSTÈME ET PROCÉDÉ DE COMMUNICATION OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2020   DE 102020127891**

(43) Veröffentlichungstag der Anmeldung:
**30.08.2023   Patentblatt 2023/35**

(73) Patentinhaber: **Deutsches Zentrum für Luft- und Raumfahrt e.V.
53227 Bonn (DE)**

(72) Erfinder:
• **LORBEER, Raoul-Amadeus
71106 Magstadt (DE)**
• **EWERS, Benjamin
71034 Böblingen (DE)**

(74) Vertreter: **RPK Patentanwälte
Reinhardt und Kaufmann
Partnerschaft mbB
Gaisburgstraße 21
70182 Stuttgart (DE)**

(56) Entgegenhaltungen:
WO-A1-2006/125975        WO-A1-2008/068544
DE-A1- 102017 130 903

## Beschreibung

### Stand der Technik

Die Erfindung betrifft ein System und ein Verfahren zur optischen Kommunikation.

Ortsgetreue virtuelle Darstellung von Informationen verschiedenster elektrischer Geräte ist im Zusammenhang mit Anwendungen der virtuellen und/oder erweiterten Realität (im Englischen als Virtual Reality (VR) / Augmented Reality (AR) bezeichnet) von Bedeutung. Ein praxisnahes Beispiel hierbei ist die einfache Übertragung von elektrischen Signalen von Messinstrumenten (Thermometer, Multimeter, Anemometer, Powermeter, ... ) nach z.B. dem Standard RS 232 oder RS 485, bzw. Statusmeldungen von Systemen (Laser, Kühlschrank, Pumpe, Umspannwerk, ... ), auch über größere Distanzen, die das Ablesen von Anzeigen erleichtert.

Die DE 102010031629 B4 offenbart ein System zum Ermitteln einer Position eines beweglichen Objekts mit einer Anordnung mit drei Allgemeinbeleuchtungs-LED, wobei eine erste Allgemeinbeleuchtungs-LED der drei Allgemeinbeleuchtungs-LED ausgebildet ist, um ein erstes Lichtsignal zu senden, das eine erste Sendezeitinformation und eine erste Senderinformation in einem ersten Wellenlängenbereich aufweist.

Die erste Senderinformation ermöglicht dabei eine Bestimmung einer Position der ersten Allgemeinbeleuchtungs-LED und die erste Sendezeitinformation ermöglicht eine Information über einen Zeitpunkt, an dem das erste Signal gesendet wurde, ist, wobei eine zweite Allgemeinbeleuchtungs-LED der zumindest drei Allgemeinbeleuchtungs-LED ausgebildet ist, um ein zweites Lichtsignal zu senden, dass eine zweite Sendezeitinformation und eine zweite Senderinformation in einem zweiten Wellenlängenbereich aufweist.

Die zweite Senderinformation ermöglicht zumindest eine Bestimmung einer Position der zweiten Allgemeinbeleuchtungs-LED. Die zweite Sendezeitinformation ist eine Information über einen Zeitpunkt, an dem das zweite Signal gesendet wurde, wobei eine dritte Allgemeinbeleuchtungs-LED der zumindest drei Allgemeinbeleuchtungs-LED ausgebildet ist, um ein drittes Lichtsignal zu senden, das eine dritte Sendezeitinformation und eine dritte Senderinformation in einem dritten Wellenlängenbereich aufweist.

Die dritte Senderinformation ermöglicht zumindest eine Bestimmung einer Position der dritten Allgemeinbeleuchtungs-LED, und die dritte Sendezeitinformation eine Information über einen Zeitpunkt ist, in dem das dritte Signal gesendet wurde, wobei der erste Wellenlängenbereich, der zweite Wellenlängenbereich und der dritte Wellenlängenbereich sich in einem Überlappungsbereich zumindest teilweise überlappen.

Das bekannte System weist ferner einen Lichtsensor auf, der an dem beweglichen Objekt befestigt ist, und ausgebildet ist, das erste bis dritte Lichtsignal in dem Überlappungsbereich zu empfangen und dem ersten Lichtsignal eine erste Signalempfangszeit zuzuordnen, dem zweiten Lichtsignal eine zweite Signalempfangszeit und dem dritten Lichtsignal eine dritte Signalempfangszeit zuzuordnen.

Weitere optische Kommunikationssysteme nach dem Stand der Technik sind aus der De102017130903 und der WO-A-2006125975 bekannt.

### Offenbarung der Erfindung

Die Aufgabe der Erfindung ist es, ein verbessertes System zur optischen Kommunikation mit elektrischen Geräten anzugeben.

Eine weitere Aufgabe ist es, ein verbessertes Verfahren zur optischen Kommunikation mit elektrischen Geräten anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird ein System zur optischen Kommunikation vorgeschlagen, umfassend wenigstens eine Lichtquelle zum Senden optischer Signale, insbesondere von seriellen optischen Signalen; wenigstens eine optische Empfangseinheit zum Empfangen der optischen Signale der wenigstens einen Lichtquelle, wobei die optische Empfangseinheit wenigstens einen Fotodetektor aufweist; wenigstens eine Maskeneinheit, die zwischen der optischen Empfangseinheit und der wenigstens einen Lichtquelle angeordnet ist, und die wenigstens bereichsweise zwischen einem wenigstens teilweise optisch nicht-weiterleitenden und wenigstens teilweise optisch weiterleitenden Zustand hin und her schaltbar ausgebildet ist. Dabei ist auf die wenigstens eine Maskeneinheit ein Abbild wenigstens eines lichtemittierenden Bereichs der wenigstens einen Lichtquelle abbildbar und im wenigstens teilweise weiterleitenden Zustand der wenigstens einen Maskeneinheit an die Empfangseinheit leitbar.

Ein lichter Abstand zwischen der wenigstens einen Maskeneinheit und/oder deren Abbildung auf die wenigstens eine Empfangseinheit und einer Eintrittsapertur der wenigstens einen Empfangseinheit ist dabei höchstens so groß, dass ein Lichtkegel des von der Maskeneinheit weitergeleiteten Abbilds wenigstens eines lichtemittierenden Bereichs der wenigstens einen Lichtquelle höchstens der Eintrittsapertur des wenigstens einen Fotodetektors der Empfangseinheit entspricht.

Die Anforderung an den Abstand folgt bevorzugt aus der Detektorgröße und/oder den Subaperturen der einzelnen Fotodetektoren. So kann vorteilhaft ein Übersprechen zwischen verschiedenen Fotodetektoren reduziert oder gar vermieden werden.

Optisch weiterleitend soll bedeuten, dass das optische Signal der wenigstens einen Lichtquelle die Maskeneinheit passieren kann. Optisch nicht-weiterleitend soll bedeuten, dass das optische Signal die Maskeneinheit nicht passieren kann. Der Begriff weiterleitend kann so verstanden werden, dass das Licht durch die Maske durchgeleitet wird oder gebeugt wird oder reflektiert wird oder absorbiert wird. So können Signale als Schwarzweiß-Signale oder in Graustufen weitergeleitet werden.

Die Lichtquellen senden optische Signale aus, welche auf die Maskeneinheit abgebildet werden. Die Maskeneinheit kann gezielt in dem Bereich, wo das Abbild der Lichtquelle hin projiziert ist, wenigstens teilweise weiterleitend, beispielsweise transparent oder durchleitend oder reflektierend, geschaltet werden, sodass das optische Signal zu der Empfangseinheit geleitet wird, wo es empfangen und an ein Datenverarbeitungssystem weitergeleitet werden kann.

Über die Maskeneinheit können auf diese Weise gezielt einzelne Lichtquellen übertragen oder ausgeblendet werden.

Das erfindungsgemäße System basiert auf optischer, insbesondere serieller, Datenübertragung mittels Lichtquellen, welche beispielsweise als Infrarot (IR)-Lichtquellen ausgebildet sein können. Hierzu gibt es verschiedene Kodierungsverfahren. Ein sehr bekanntes Kodierungsverfahren wird beispielsweise über die Spezifikationen der Infrared Data Association (IrDA) beschrieben, beispielsweise in "Infrared Data Association Serial Infrared Physical Layer Specification" Version 1.4, 30. Mai 2001 (https://www.irda.org/standards/pubs/IrPHY_1p4.pdf).

Optional ist es möglich, lichtempfindliche, insbesondere Infrarotlichtempfindliche Zeilen- oder Matrixsensoren, einzusetzen, um die Lichtquellen zu identifizieren und zu lokalisieren.

Weiter wird eine dynamische Abschattung/-Maskierung über eine Maskeneinheit eingesetzt, um das Signal-zu-Rauschverhältnis insbesondere für bestimmte Einfallswinkel der optischen Signale zu verbessern.

Dieses Merkmal kann kombiniert werden mit einer Anordnung, insbesondere einem Array von Fotodetektoren, beispielsweise Fotodioden, um mehrere Lichtquellen gleichzeitig empfangen zu können.

Das System erlaubt auf diese Weise eine Art "Kameragestütztes optisches Datenmultiplexing". Dies erlaubt es, Signalquellen, die sonst auf denselben Detektor treffen, auf einfache Weise gezielt zu unterdrücken, ohne den Detektor elektrisch aufwendig zu strukturieren.

Als Lichtquelle kann beispielsweise eine optisch emittierende Datenquelle, z.B. LED oder Laserdiode, eingesetzt werden. Auch ganze Emissionsflächen können mit dem System genutzt werden.

Das System kann optional eine Kamera mit einem großen Sichtfeld zur Lokalisation der Lichtquellen umfassen, welche eine Empfindlichkeit im infraroten Lichtspektrum aufweist. Solche Kameras sind in VR/AR-Anwendungen verbreitet.

Eine Optikeinheit dient dazu, eine Lichtquelle auf die Maskeneinheit abzubilden, welche beispielsweise als wenigstens teilweise weiterleitende ortsauflösend adressierbare dynamische Maske ausgebildet sein kann. Die dynamische Maske kann beispielsweise als Flüssigkristall (TFT)-Schirm ausgebildet sein (TFT = Thin Film Transistor). Möglich ist beispielsweise auch, einen Mikrospiegelaktor oder LCoS (LCoS = Liquid Crystal on Silicon) Display, insbesondere in Form eines so genannten DLP-Chips (DLP = Digital Light Processing), einzusetzen. Die dynamische Maske kann nun für die mit Hilfe der Kamera lokalisierten Infrarot-Lichtquellen gezielt punktuell wenigstens teilweise weiterleitend geschaltet werden, so dass die Licht-Signal-Daten empfangen werden können.

Die dynamische Maske kann beispielsweise auch zwischen einem transparenten und einem nicht-transparenten Zustand schaltbar ausgebildet sein. Weiter ist auch möglich, dass die dynamische Maske als lichtbeugende Komponente ausgebildet ist, welche durch einen schaltbaren Beugungseffekt zwischen einem weiterleitenden Zustand und einem nicht-weiterleitenden Zustand schaltbar ist.

Weiter ist auch möglich, dass die dynamische Maske als polarisationsdrehende Komponente ausgebildet ist, welche durch einen schaltbaren Doppelbrechungseffekt in Kombination mit Polarisator und Analysator zwischen einem weiterleitenden Zustand und einem nicht-weiterleitenden Zustand schaltbar ist.

Das Schalten zwischen dem weiterleitenden Zustand und einem nicht-weiterleitenden Zustand geschieht dynamisch, sodass z.B. Bewegungen des Systems ausgeglichen werden können. Das noch transmittierte Licht fällt so auf einen der dahinter angeordneten Detektoren der Empfangseinheit. Hierbei können vorteilhaft mehrere Fotodetektoren eingesetzt werden, z.B. ein Fotodioden-Array, um mehrere Signale parallel verarbeiten zu können.

Die so gewonnenen Daten können ortsgetreu in VR/AR Systemen dargestellt werden. Bei einem genügend lichtstarken Objektiv als Optikeinheit kann die Kommunikation auch über größere Distanzen stattfinden.

Sollte ein Füllfaktor des Detektorarrays nicht groß genug sein, dadurch dass Lücken zwischen den einzelnen Detektoren vorhanden sind, dann können zusätzlich noch Sammellinsen zum Einsatz kommen, die das Licht auf die einzelnen Detektoren bündeln.

Vorteilhaft kann das System eine Kamera zur Lokalisierung der Lichtquelle, sowie eine Optikeinheit zur Abbildung der Lichtquelle auf die Maskeneinheit umfassen. Der Einsatz einer Maskeneinheit in Form einer transmittierenden Maske bietet wesentliche Vorteile hinsichtlich einer kompakten Baugröße des Systems. Hier ist sowohl die Übertragung von teilweise oder vollständig weiterleitenden Zuständen bei der Wahl der Maske möglich. Insbesondere wenn die Empfangseinheit unmittelbar an der Maskeneinheit anliegt, kann eine sehr kompakte Baugröße für das System erreicht werden. So kann auch ein großer Akzeptanzwinkel in der Zwischenabbildung der Lichtquelle auf die Maskeneinheit gewährt werden, wodurch kompaktere Systeme möglich sind.

Vorteilhaft entspricht der Abstand zwischen der wenigstens einen Maskeneinheit und/oder deren Abbildung auf die wenigstens eine Empfangseinheit und der Eintrittsapertur der wenigstens einen Empfangseinheit höchstens einem Quotienten aus einem Durchmesser der Eintrittsapertur wenigstens eines Fotodetektors der Empfangseinheit und einer Blendenzahl einer Optikeinheit im Strahlengang zwischen der wenigstens einen Lichtquelle und der wenigstens einen Maskeneinheit, um ein Übersprechen zwischen verschiedenen Fotodetektoren zu vermeiden.

Ein möglichst geringer Abstand zwischen Maskeneinheit und Eintrittsapertur bedeutet, dass die Maske oder deren optische Abbildung nicht weiter als ein Abstand $\Delta z$ von der Eintrittsapertur mit effektivem Durchmesser D eines einzelnen Fotodetektors entfernt ist, wobei der Abstand $\Delta z$ sich ergibt aus:

$$\Delta z \leq D/(2\sin{(\alpha)})$$

wobei $\alpha$ der halbe Öffnungswinkel der abgebildeten Lichtquelle ist.

Für ein Objektiv mit einer Brennweite f gilt, dass $2\sin{(\alpha)}$ der Blendenzahl entspricht, also bei Blende f/2 der maximale Abstand dem doppelten Durchmesser D der Eintrittsapertur des Fotodetektors entspricht. Damit kann ein permanentes Übersprechen zwischen benachbarten Fotodetektoren vermieden werden, was sich bei einem größeren Abstand ergeben könnte und was damit die Nutzbarkeit des Systems beeinträchtigen könnte.

Für das Übertragungsprotokoll der optischen Signale kann vorteilhaft ein Identifikator, z.B. ein ID oder ein Tag, vorgesehen sein, der zusätzlich Aufschluss über den übertragenen Inhalt der optischen Signale gibt. So können verschiedene Arten von Informationen effektiv vorgefiltert werden.

Durch den Einsatz einer gemeinsamen Abbildungsoptik lässt sich eine erhöhte Reichweite für alle Licht-Empfänger erzielen.

Eine Datenreduktion kann erreicht werden durch das Anordnen mehrerer Fotodioden in der Empfangseinheit, die getrennt Signale verwerten können. Auch auf diese Weise können mehrere Lichtquellen gleichzeitig empfangen werden. Weiterhin ist es möglich, nahe beieinanderliegende Lichtquellen sequentiell anzusteuern und trotzdem sauber zu trennen.

Die Erfindung erlaubt es, vorhandene Informationsquellen simultan zu lokalisieren und dennoch eine größere Datenrate, z.B. 1 Mbit/s, zu erreichen. Bei nahe aneinanderlegenden Fotoemittern können diese sequentiell abgefragt werden.

Ein weiterer Vorteil des Systems liegt in der potentiellen Kompatibilität, bzgl. elektrischer und Software-Schnittstellen zu optischen Datenkommunikationsstandards wie z.B. den Standards der Infrared Data Association (IrDA), so dass die Anbindung an viele Signalquellen auf möglichst einfache Weise gegeben ist.

Vorteilhaft kann das erfindungsgemäße System in einer VR/AR Umgebung zum Ablesen von diversen Instrumenten, auch aus der Entfernung) eingesetzt werden. Dies kann beispielsweise in gefährlichen Umgebungen mit Sicherheitsausrüstung oder in Laboren geschehen.

Das System kann aus ästhetischen Gründen, beispielsweise als versteckte Displays, in der Raumfahrt, bei AR-gestützter Chirurgie eingesetzt werden. Das System kann zur Anwendung kommen beispielsweise bei Kontrollgängen in Großanlagen, bei touristischen Informationssystemen (AR-Führer) oder in der Werbung, z.B. als virtuelles Schaufenster.

Nach einer günstigen Ausgestaltung des Systems kann eine Lokalisationseinheit, insbesondere Kamera, zur Lokalisation der wenigstens einen Lichtquelle vorgesehen sein. Die Lokalisation der Lichtquellen kann beispielsweise mittels üblicher Digitalkameras erfolgen, die in dem Wellenlängenbereich der optischen Signale empfindlich genug sind. Damit kann die Maskeneinheit gezielt mit der Ortsinformation der Lichtquelle angesteuert und wenigstens teilweise weiterleitend geschaltet werden.

Nach einer günstigen Ausgestaltung des Systems kann die wenigstens eine Maskeneinheit wenigstens eine ortsaufgelöst adressierbare, zumindest bereichsweise zwischen wenigstens teilweise optisch nicht-weiterleitenden und wenigstens teilweise optisch weiterleitenden Zuständen schaltbare dynamische Maske aufweisen. Die dynamische Maske kann so für die mit Hilfe der Kamera lokalisierten Infrarot-Lichtquellen gezielt punktuell wenigstens teilweise weiterleitend geschaltet werden, so dass die Licht-Signal-Daten empfangen werden können.

Erfindungsgemäss ist eine Optikeinheit im Strahlengang zwischen der wenigstens einen Lichtquelle und der wenigstens einen Maskeneinheit angeordnet.

Die Optikeinheit dient dazu, eine Lichtquelle auf die wenigstens eine Maskeneinheit abzubilden, welche als wenigstens teilweise weiterleitende ortsauflösend adressierbare dynamische Maske ausgebildet sein kann. Damit können optische Signale ausgewählter Lichtquellen gezielt an die Empfangseinheit übertragen werden.

Nach einer günstigen Ausgestaltung des Systems kann ein doppelbrechendes optisches Element und/oder ein diffraktives optisches Element im Strahlengang zwischen der Optikeinheit und der wenigstens einen Maskeneinheit angeordnet sein. Insbesondere kann dabei zwischen der Optikeinheit und dem doppelbrechenden optischen Element und/oder dem diffraktiven optischen Element ein Verzögerungselement, beispielsweise eine Lambda/4-Platte oder eine Lambda/2-Platte oder dergleichen, angeordnet sein.

Um blinde Stellen auf einem Fotodetektorarray der Empfangseinheit zu umgehen, ist es vorzuziehen, ein diffraktives optisches Element (DOE) und/oder ein doppelbrechendes optisches Element (DBE) vor oder nach der Maskeneinheit zu installieren. Hierdurch können zwei oder mehr optische Abbilder der Lichtquelle auf unterschiedliche Bereiche des Detektorarrays projiziert werden, sodass zumindest immer ein Abbild einen Fotodetektor auf dessen empfindlichen Apertur beleuchtet.

Vorteilhaft kann weiter eine Lambda/4-Platte vor dem DBE installiert werden. Bei korrekter Installation kann so links und rechts zirkular polarisiertes Licht in zu dem DBE passend ausgerichtete senkrecht und horizontal polarisierte Lichtstrahlen konvertiert werden. Diese können bei genügend großer räumlicher Separation getrennt ausgelesen werden. Mit zirkular polarisiertem Licht funktioniert dies unabhängig von der Ausrichtung senkrecht zur Sichtachse zwischen Empfängereinheit und Lichtquelle.

Nach einer günstigen Ausgestaltung des Systems kann im Strahlengang zwischen der Optikeinheit und der wenigstens einen Maskeneinheit ein doppelbrechendes optisches Element, gefolgt von einem polarisationsdrehenden Element, angeordnet sein. Insbesondere kann die Maskeneinheit wenigstens einen Polarisator gefolgt von einer dynamischen Maske, gefolgt von einem Analysator aufweisen. Insbesondere kann dabei zwischen der Optikeinheit und dem doppelbrechenden optischen Element und/oder dem diffraktiven optischen Element ein Verzögerungselement, beispielsweise eine Lambda/4-Platte oder dergleichen, angeordnet sein. Weiter kann insbesondere das polarisationsdrehende Element in die dynamische Maske integriert sein.

Weiter ist auch möglich, dass die dynamische Maske als polarisationsdrehende Komponente ausgebildet ist, welche durch einen schaltbaren Doppelbrechungseffekt in Kombination mit Polarisator und Analysator zwischen einem weiterleitenden Zustand und einem nicht-weiterleitenden Zustand schaltbar ist.

Zur Maximierung der Signaltransmission durch die Maskeneinheit mittels einer LCD-Einheit ist es möglich, ein doppelbrechendes optisches Element mit einem polarisationsdrehenden LCD-Element, insbesondere als Lambda/2 Verzögerungselement, zu kombinieren, das analog zu der Ausführung einer dynamischen Maske als polarisationsdrehende Komponente ausgebildet ist, welche zwischen einem polarisationsdrehenden Zustand und einem nicht-polarisationsdrehenden Zustand schaltbar ist. So können beide Polarisationskomponenten der übertragenen Lichtstrahlen separiert und für die Maskeneinheit fehlangepasste Komponenten in der Polarisation getrennt kontrolliert werden, so dass ein Großteil des Lichts auf die Fotodetektoren trifft.

Nach einer günstigen Ausgestaltung des Systems kann eine weitere Optikeinheit im Strahlengang zwischen der Empfangseinheit und der wenigstens einen Maskeneinheit angeordnet sein.

Damit kann die Abbildung der Lichtquelle auf der wenigstens einen Maskeneinheit auf die Empfangseinheit abgebildet werden. Auf diese Weise ist es möglich, die optischen Signale wenigstens teilweise punktförmig abzubilden, um so eine hohe Auflösung und ein gutes Signal-zu-Rauschverhältnis zu erreichen.

Nach einer günstigen Ausgestaltung des Systems kann die wenigstens eine Maskeneinheit wenigstens zwei dynamische Masken aufweisen. Insbesondere kann die wenigstens eine Maskeneinheit wenigstens zwei separat voneinander ansteuerbare dynamische Masken aufweisen. Sollte die Position der Lichtquelle nicht bekannt sein, ist es auch möglich, durch geschickt wenigstens teilweise iterativ, alternierend wenigstens teilweise weiterleitend geschaltete Maskeneinheiten relevante Signal-Quellen einzugrenzen und so zu verfolgen. Damit kann eine Lokalisierung der Lichtquellen auch ohne Kamera erfolgen.

Weiter hat die Ausbildung der Maskeneinheit den Vorteil, dass ein höherer optischer Kontrast zur Hintergrundunterdrückung erreicht werden kann, und dass eine einfache Annäherung an eine Fokussierbarkeit der Maskeneinheit erreicht werden kann. Dadurch kann der Kontrast in unterschiedlichen Entfernungen der Lichtquellen auch bei simultaner Erfassung mehrerer Lichtquellen verbessert werden.

Nach einer günstigen Ausgestaltung des Systems kann wenigstens eine weitere Optikeinheit im Strahlengang vor der wenigstens einen dynamischen Maske und/oder nach der wenigstens einen dynamischen Maske oder zwischen wenigstens zwei dynamischen Masken angeordnet sein. Insbesondere kann dabei die Optikeinheit wenigstens ein dispersives optisches Element zwischen zwei diffraktiven oder refraktiven optischen Elementen aufweisen.

In einem weiteren Ausführungsbeispiel kann die weitere Optikeinheit um ein dispersives optisches Element, beispielsweise ein transmittives oder reflektives Gitter oder ein Prisma, ergänzt werden. Dies ermöglicht eine spektrale Aufspaltung der Lichtstrahlen auf mehrere Detektoren der Empfangseinheit. Hier kann eine lineare Anordnung von Fotodioden mit einem großen Aspektverhältnis, also einer länglich Ausbildung, sinnvoll sein, um den Abstand der Fotodioden zu minimieren. Je nach Position der Lichtquelle können so alle spektralen Kanäle simultan von den Fotodetektoren empfangen werden. Dies erlaubt es, viele monochromatische Datenkanäle oder weniger polychromatische Datenkanäle mit höherer Bandbreite in derselben Systemarchitektur zu nutzen. Um lediglich gezielt einzelne "Unterkanäle" zu adressieren, ist es auch möglich, eine weitere Abschattungsmaske vor den Fotodetektoren zu installieren und unerwünschte Kanäle zu blockieren. Auf diese Weise kann zudem das Signal-zu-Rauschverhältnis in hellen Umgebungen weiter optimiert werden, ohne auf eine spezielle Wellenlänge festgelegt zu sein.

Nach einer günstigen Ausgestaltung des Systems kann die wenigstens eine Lichtquelle wenigstens eine LED und/oder wenigstens einen Fotoemitter und/oder wenigstens einen Laseremitter aufweist. Diese stellen gebräuchliche punktförmige Lichtquellen dar, welche günstigerweise im infraroten Lichtspektrum arbeiten können.

Alternativ oder zusätzlich kann die wenigstens eine Lichtquelle zum Senden und die optische Empfangseinheit zum Empfangen optischer Signale als Infrarot-Strahlung, insbesondere nach den Standards der IrDA, ausgebildet sein. Optische serielle Datenübertragung kann insbesondere mittels Infrarot (IR)-Lichtquellen stattfinden. Hierzu gibt es verschiedene Kodierungsverfahren. Sehr bekannte Kodierungsverfahren werden beispielsweise über die Standards der IrDA beschrieben.

Alternativ oder zusätzlich kann die optische Empfangseinheit eine Anordnung von Fotodetektoren, insbesondere ein Array von Fotodioden, aufweisen. Über eine Anordnung von mehreren Fotodetektoren, insbesondere einem rechteckförmigen Array von Fotodetektoren können mehrere Lichtquellen gleichzeitig empfangen werden, Außerdem ist es möglich, nahe beieinander liegende Lichtquellen sequentiell anzusteuern und dennoch sauber zu trennen.

Nach einer günstigen Ausgestaltung des Systems kann die wenigstens einen Maskeneinheit als dynamische Maske wenigstens einen Flüssigkristall (TFT)-Schirm aufweisen. Diese Art von Bildschirmen können auf einfache Weise ortsaufgelöst adressierbar wenigstens teilweise weiterleitend geschaltet werden. Außerdem stellen sie gebräuchliche Bildschirme dar.

Nach einer günstigen Ausgestaltung des Systems können die optischen Signale wenigstens einen Identifikator zur Verarbeitung und/oder Darstellung aufweisen. Mittels dieses Identifikators können die optischen Signale selektiert werden und insbesondere gefiltert werden. Auf diese Weise können Informationen aus den optischen Signalen gezielt extrahiert werden und so auch verschiedene Arten von Informationen auf effektive Weise vorgefiltert werden.

Nach einer günstigen Ausgestaltung des Systems kann wenigstens eine Lichtquelle zum Senden optischer Signale und die wenigstens eine optische Empfangseinheit in einer optischen Übertragungseinheit integriert sein. Dadurch kann eine kompakte Einheit geschaffen werden, welche sowohl optische Signale aussenden als auch empfangen kann. Damit kann ein elektrisches Gerät zur optischen Kommunikation auf einfache Weise nachgerüstet werden.

Nach einem weiteren Aspekt der Erfindung wird ein Verfahren zur optischen Kommunikation mit einem System wie zuvor beschrieben vorgeschlagen, wobei wenigstens eine Lichtquelle optische Signale aussendet, insbesondere serielle optische Signale. Wenigstens eine optische Empfangseinheit empfängt die optischen Signale, wobei die optische Empfangseinheit wenigstens einen Fotodetektor aufweist.

Dabei wird auf wenigstens eine Maskeneinheit, die zwischen der optischen Empfangseinheit und der wenigstens einen Lichtquelle angeordnet ist, und die wenigstens bereichsweise zwischen einem wenigstens teilweise optisch nicht-weiterleitenden und wenigstens teilweise optisch weiterleitenden Zustand hin und her umgeschaltet werden kann, ein Abbild wenigstens eines lichtemittierenden Bereichs der wenigstens einen Lichtquelle abgebildet und im wenigstens teilweise weiterleitenden Zustand der wenigstens einen Maskeneinheit an die Empfangseinheit geleitet.

Ein lichter Abstand zwischen der wenigstens einen Maskeneinheit und/oder deren Abbildung auf die wenigstens eine Empfangseinheit und einer Eintrittsapertur der wenigstens einen Empfangseinheit wird höchstens so groß gewählt, dass ein Lichtkegel des von der Maskeneinheit weitergeleiteten Abbilds der wenigstens einen Lichtquelle höchstens der Eintrittsapertur wenigstens des Fotodetektors der Empfangseinheit entspricht.

Nach einer günstigen Ausgestaltung des Verfahrens kann die wenigstens eine Lichtquelle durch eine Lokalisierungseinheit, insbesondere eine Kamera, lokalisiert werden. Damit kann die Maskeneinheit gezielt mit der Ortsinformation der Lichtquelle angesteuert und wenigstens teilweise weiterleitend geschaltet werden. Auf diese Weise können die optischen Signale über die Maskeneinheit gezielt ausgewählt und an die Empfangseinheit übertragen werden.

Nach einer günstigen Ausgestaltung des Verfahrens kann zumindest ein lichtemittierender Bereich der wenigstens einen Lichtquelle über wenigstens eine Optikeinheit auf wenigstens eine dynamische Maske der wenigstens einen Maskeneinheit abgebildet werden, und die dynamische Maske an einem Abschnitt, an dem die optischen Signale der wenigstens einen Lichtquelle auf den wenigstens eine dynamische Maske auftreffen, in den wenigstens teilweise weiterleitenden Zustand geschaltet werden. Die Optikeinheit kann dazu dienen, den lichtemittierenden Bereich einer Lichtquelle auf die wenigstens eine Maskeneinheit abzubilden, welche als wenigstens teilweise weiterleitende ortsauflösend adressierbare dynamische Maske ausgebildet sein kann.

Damit können optische Signale gezielt aus Lichtquellen ausgewählt und an die Empfangseinheit übertragen werden. Mittels der dynamischen Maske können so auch einzelne Bereiche aus größeren flächenartig ausgedehnten Lichtquellen, wie beispielsweise Bildschirmen, ausgewählt werden, um so gezielt Informationen aus Bildschirminhalten optisch zu übertragen.

Nach einer günstigen Ausgestaltung des Verfahrens können zwei oder mehr Abbilder des lichtemittierenden Bereichs der wenigstens einen Lichtquelle über ein doppelbrechendes optisches Element und/oder ein diffraktives optisches Element im Strahlengang zwischen der Optikeinheit und der wenigstens einen Maskeneinheit als separate Abbilder auf verschiedene Abschnitte der Maskeneinheit abgebildet werden. Insbesondere können die zwei oder mehr Abbilder über ein zwischen der Optikeinheit und dem doppelbrechenden optischen Element und/oder dem diffraktiven optischen Element angeordneten Verzögerungselement abgebildet werden. Das Verzögerungselement kann dabei als Lambda/4-Platte oder dergleichen ausgebildet sein.

Vorteilhaft können so blinde Stellen auf einem Fotodetektorarray der Empfangseinheit umgangen werden. Hierdurch können zwei oder mehr optische Abbilder der Lichtquelle auf unterschiedliche Bereiche des Detektorarrays projiziert werden, sodass zumindest immer ein Abbild einen Fotodetektor auf dessen empfindlichen Apertur beleuchtet.

Nach einer günstigen Ausgestaltung des Verfahrens können für die Maskeneinheit in der Polarisation fehlangepasste Abbilder des lichtemittierenden Bereichs der wenigstens einen Lichtquelle über ein doppelbrechendes optisches Element gefolgt von einem polarisationsdrehenden Element im Strahlengang zwischen der Optikeinheit und der wenigstens einen Maskeneinheit getrennt an die Maskeneinheit optisch weitergeleitet werden, wobei die Maskeneinheit wenigstens einen Polarisator gefolgt von einer dynamischen Maske, gefolgt von einem Analysator aufweist. Insbesondere kann dabei zwischen der Optikeinheit und dem doppelbrechenden optischen Element und/oder dem diffraktiven optischen Element eine Verzögerungselement angeordnet sein

Zur Maximierung der Signaltransmission durch die Maskeneinheit mittels einer LCD-Einheit können so beide Polarisationskomponenten der übertragenen Lichtstrahlen separiert und für die Maskeneinheit fehlangepasste Komponenten in der Polarisation getrennt kontrolliert werden, so dass ein Großteil des Lichts auf die Fotodetektoren trifft.

Nach einer günstigen Ausgestaltung des Verfahrens können unterschiedlich zirkular polarisierte Abbilder des lichtemittierenden Bereichs der wenigstens einen Lichtquelle über eine zwischen der Optikeinheit und dem doppelbrechenden optischen Element und/oder dem diffraktiven optischen Element angeordnetes Verzögerungselement, beispielsweise eine Lambda/4-Platte oder dergleichen, getrennt an die Maskeneinheit optisch weitergeleitet werden.

Vorteilhaft kann so bei korrekter Installation links und rechts zirkular polarisiertes Licht in zu dem DBE passend ausgerichtete senkrecht und horizontal polarisierte Lichtstrahlen konvertiert werden. Diese können bei genügend großer räumlicher Separation getrennt ausgelesen werden.

Nach einer günstigen Ausgestaltung des Verfahrens können wenigstens zwei dynamische Masken der wenigstens einen Maskeneinheit für optische Signale von wenigstens zwei Lichtquellen separat in den wenigstens teilweise weiterleitenden Zustand geschaltet werden. Insbesondere können dabei die optischen Signale der wenigstens zwei Lichtquellen sequentiell angesteuert werden. Damit kann Information von zwei Lichtquellen getrennt verarbeitet werden.

Dies hat weiter den Vorteil, dass ein höherer Kontrast zur Hintergrundunterdrückung erreicht wird.

Weiter kann so eine einfache Annäherung an eine Fokussierbarkeit der Maskeneinheit erreicht werden, sodass der Kontrast in unterschiedlichen Entfernungen auch bei simultaner Erfassung mehrerer Lichtquellen verbessert wird.

Es ist so möglich, sollte die Position der Lichtquelle nicht bekannt sein, durch geschickt teilweise iterativ, alternierend wenigstens teilweise weiterleitend geschaltete Maskeneinheiten relevante Signal-Quellen einzugrenzen und so zu verfolgen. Damit kann eine Lokalisierung der Lichtquellen auch ohne Kamera erfolgen.

Nach einer günstigen Ausgestaltung des Verfahrens können die wenigstens zwei Lichtquellen simultan mit der Lokalisierungseinheit, insbesondere Kamera, lokalisiert werden.

Auf diese Weise ist es möglich, vorhandene Informationsquellen simultan zu lokalisieren und dennoch eine größere Datenrate, z.B. 1 Mbit/s zu erreichen. Bei nahe aneinanderlegenden Fotoemittern als Lichtquellen können diese sequentiell abgefragt werden.

Nach einer günstigen Ausgestaltung des Verfahrens kann eine spektrale Aufspaltung die optischen Signale der wenigstens einen Lichtquelle über wenigstens eine weitere Optikeinheit im Strahlengang vor der wenigstens einen dynamischen Maske und/oder nach der wenigstens einen dynamischen Maske oder zwischen wenigstens zwei dynamischen Masken erfolgen. Insbesondere kann dabei eine spektrale Aufspaltung die optischen Signale der wenigstens einen Lichtquelle über wenigstens ein dispersives optisches Element zwischen zwei diffraktiven oder refraktiven optischen Elementen der Optikeinheit erfolgen, wobei das Abbild des lichtemittierenden Bereichs der wenigstens einen Lichtquelle spektral aufgelöst auf die zweite dynamische Maske abgebildet wird.

Dies erlaubt es, viele monochromatische Datenkanäle oder weniger polychromatische Datenkanäle mit höherer Bandbreite in derselben Systemarchitektur zu nutzen. Um lediglich gezielt einzelne "Unterkanäle" zu adressieren, ist es auch möglich, eine weitere Abschattungsmaske vor den Fotodetektoren zu installieren und unerwünschte Kanäle zu blockieren. Auf diese Weise kann zudem das Signal-zu-Rauschverhältnis in hellen Umgebungen weiter optimiert werden, ohne auf eine spezielle Wellenlänge festgelegt zu sein.

Nach einer günstigen Ausgestaltung des Verfahrens können die optischen Signale der wenigstens einen Lichtquelle ortsaufgelöst gesendet werden. Eine flächig ausgedehnte Lichtquelle kann auf die Maskeneinheit beispielsweise über eine Optikeinheit abgebildet werden. Auf der Maskeneinheit kann ein Bereich gezielt adressiert und wenigstens teilweise weiterleitend geschaltet werden, sodass nur die optische Information, welche auf diesen Bereich abgebildet wird, auch an die Empfangseinheit weitergeleitet wird. Auf diese Weise können optische Signale einer Lichtquelle gezielt ortsaufgelöst an die Empfangseinheit übertragen werden.

Vorteilhaft können die optischen Signale der wenigstens einen Lichtquelle auf die optische Empfangseinheit gerichtet gesendet werden.

Über die Verwendung von wenigstens zwei Maskeneinheiten, welche in der Tiefe hintereinander angeordnet sind, kann über flächig versetzt wenigstens teilweise weiterleitend geschaltete Bereiche der verschiedenen Maskeneinheiten eine Raumrichtung ausgewählt werden, in welche die optischen Signale gerichtet gesendet werden.

Eine weitere Möglichkeit stellt der Einsatz eines Laseremitters als Lichtquelle dar, welcher optische Signale über wenigstens einen ansteuerbaren Umlenkspiegel gezielt in eine gewünschte Raumrichtung lenken kann.

Nach einer günstigen Ausgestaltung des Verfahrens können die optischen Signale der wenigstens einen Lichtquelle in einem Datenverarbeitungssystem ausgewertet werden. Insbesondere können die optischen Signale auf einem System für virtuelle und/oder erweiterte Realität dargestellt werden. Auf diese Weise können ortsgetreue virtuelle Darstellungen von Informationen verschiedenster elektrischer Geräte im Zusammenhang mit VR/AR-Anwendungen verwirklicht werden.

Nach einer günstigen Ausgestaltung des Verfahrens können die optischen Signale der wenigstens einen Lichtquelle mittels wenigstens eines Identifikators verarbeitet und/oder dargestellt werden. Vorteilhaft können die optischen Signale dabei selektiert, insbesondere gefiltert werden. Auf diese Weise können Informationen aus den optischen Signalen gezielt extrahiert werden und so auch verschiedene Arten von Informationen in den optischen Signalen auf effektive Weise vorgefiltert werden.

**Zeichnung**

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**

Fig. 1      ein Systemdiagramm eines Systems zur optischen Kommunikation nach einem Ausführungsbeispiel der Erfindung;

Fig. 2      eine schematische Darstellung des Systems zur optischen Kommunikation nach einem Ausführungsbeispiel der Erfindung;

Fig. 3      eine detaillierte Darstellung eines Empfangsvorgangs optischer Signale über eine Maskeneinheit des Systems nach einem Ausführungsbeispiel der Erfindung;

Fig. 4      eine schematische Darstellung eines Empfangsvorgangs optischer Signale mit zwei Maskeneinheiten des Systems nach einem weiteren Ausführungsbeispiel der Erfindung;

Fig. 5      eine schematische Darstellung eines Sendevorgangs optischer Signale über eine Maskeneinheit nach einem weiteren Ausführungsbeispiel der Erfindung; und

Fig. 6      eine schematische Darstellung eines Sendevorgangs optischer Signale über einen Umlenkspiegel nach einem weiteren Ausführungsbeispiel der Erfindung;

Fig. 7      eine detaillierte Darstellung eines Empfangsvorgangs optischer Signale über eine Maskeneinheit des Systems nach einem weiteren Ausführungsbeispiel der Erfindung mit einem zusätzlichen doppelbrechenden optischen Element sowie einem polarisationsdrehenden Element und einer Lambda/4-Platte.

Fig. 8      eine Schnittdarstellung des Systems nach Figur 7;

Fig. 9      eine detaillierte Darstellung eines Empfangsvorgangs optischer Signale über eine Maskeneinheit des Systems nach einem weiteren Ausführungsbeispiel der Erfindung mit einem zusätzlichen doppelbrechenden optischen Element oder einem diffraktiven optischen Element.

Fig. 10     eine Schnittdarstellung des Systems nach Figur 9;

Fig. 11     eine detaillierte Darstellung eines Empfangsvorgangs optischer Signale über zwei Masken einer Maskeneinheit des Systems nach einem weiteren Ausführungsbeispiel der Erfindung mit einem dazwischen angeordneten dispersiven optischen Element

Fig. 12     eine Schnittdarstellung des Systems nach Figur 11.

**Ausführungsformen der Erfindung**

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

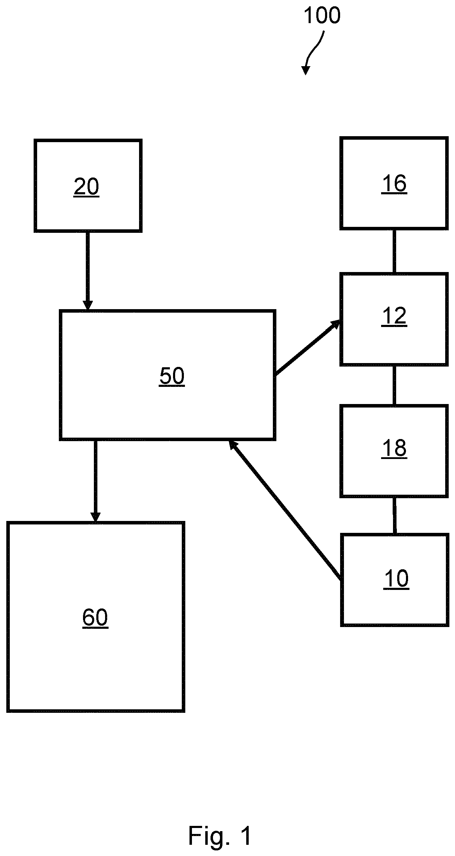

In Figur 1 ist ein Systemdiagramm des Systems 100 zur optischen Kommunikation nach einem Ausführungsbeispiel der Erfindung dargestellt. Dargestellt ist ein Flussschema der optischen und elektrischen Komponenten des Systems 100, welches auch den Ablauf des erfindungsgemäßen Verfahrens schematisch darstellt.

Eine Lokalisationseinheit 20 ist zur Lokalisation von Lichtquellen vorgesehen und steuert diese Information nach erfolgter Lokalisierung einer Lichtquelle in ein Datenverarbeitungssystem 50 ein. Eine Optikeinheit 16 bildet die Lichtquelle auf eine Maskeneinheit 12 ab, welche an einem durch die Information über die lokalisierte Lichtquelle adressierten Bereich der Maskeneinheit 12, auf den die Lichtquelle abgebildet wird, in einen wenigstens teilweise weiterleitenden Zustand geschaltet wird. Dadurch kann ein optisches Signal der Lichtquelle über eine zweite Optikeinheit 18 auf die Empfangseinheit 10 weitergeleitet werden, wo es empfangen und dekodiert wird. Zur Auswertung und Weiterverarbeitung sendet die Empfangseinheit 10 das daraus umgewandelte elektrische Signal an das Datenverarbeitungssystem 50. Von dort kann mit der daraus dekodierten Information ein VR/AR-System 60 angesteuert werden.

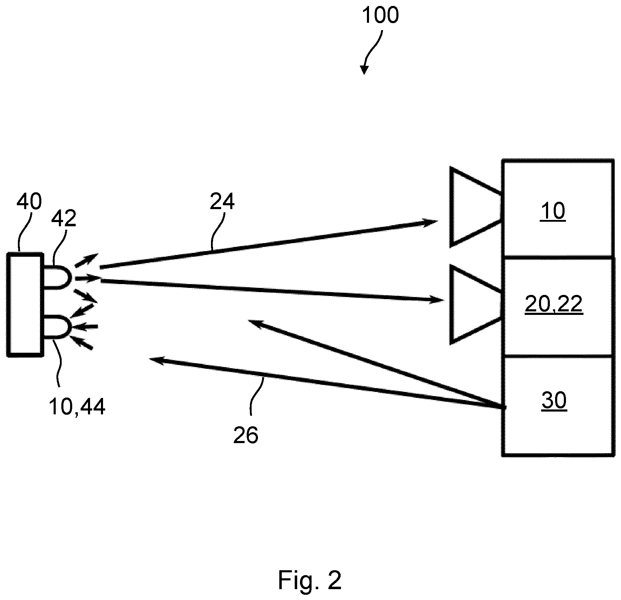

Figur 2 zeigt eine schematische Darstellung des Systems 100 zur optischen Kommunikation nach einem Ausführungsbeispiel der Erfindung.

Die Figur zeigt eine mögliche Konfiguration des gesamten Systems 100. Das System 100 dient dazu, eine optische Übertragungseinheit 40 mit einer Lichtquelle 42 und einer Empfangsdiode 44 zu lokalisieren und deren Datenstrom der optischen Signale 24 auszuwerten. Weiterhin können über eine gerichtete Sendeeinheit 30, durch einen kleinen Sendekegel augensicher und abhörsicher, Kommandos und Informationen an die optische Übertragungseinheit 40 zurückgesendet werden. Die Lokalisierung der Übertragungseinheit 40 kann mit einer handelsüblichen Digitalkamera 22 stattfinden, die in dem Wellenlängenbereich der Übertragungseinheit 40 empfindlich genug ist. Hier werden die im Video erfassbaren Signaturen der optisch seriellen Signale 24, wie z.B. eine Punktquelle sowie zeitliche Fluktuation der Intensität ausgewählt und als Kandidaten zur seriellen Kommunikation identifiziert.

Die gerichtete Empfangseinheit 10 kann mit dieser Information die mögliche Lichtquelle 42 zur seriellen Kommunikation adressieren und feststellen, ob ein auswertbares Signal 24 empfangen wird. Wenn das der Fall ist, kann eine serielle Kommunikation stattfinden.

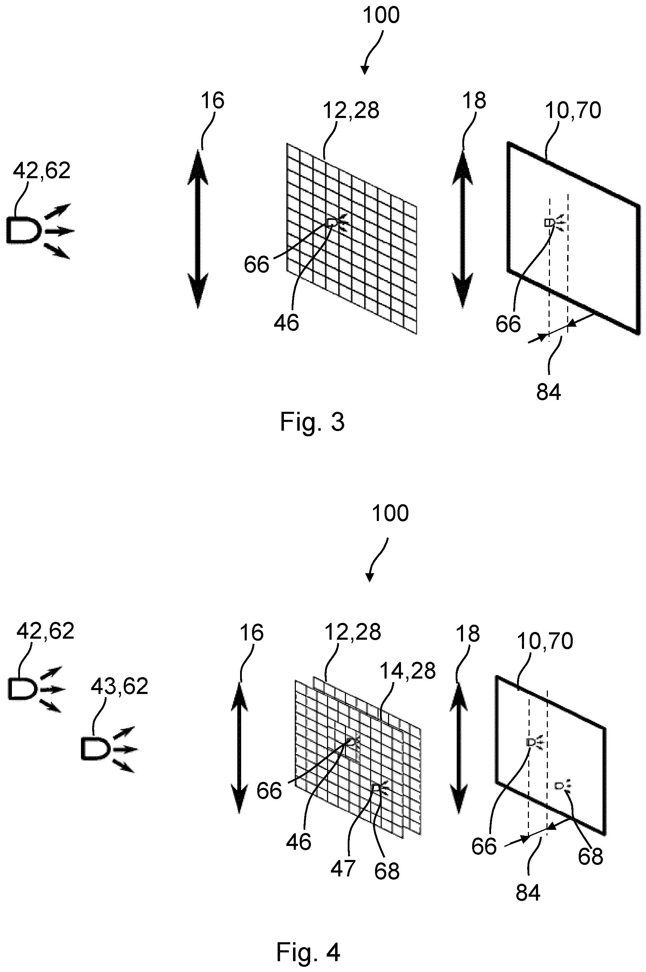

Das in Figur 2 dargestellte System 100 umfasst die optische Übertragungseinheit 40, welche die Lichtquelle 42, beispielsweise in Form einer Sendediode, zum Senden optischer Signale 24 und die Empfangsdiode 44 zum Empfangen der optischen Signale 26 aufweist. Über das ausgesendete optische Signal 24 der Lichtquelle 42 kann eine Lokalisationseinheit 20, welche insbesondere als Kamera 22 ausgebildet sein kann, eine Lokalisierung der Lichtquelle 42 vornehmen. Die Empfangseinheit 10 kann nach erfolgter Lokalisierung über eine Maskeneinheit 28, welche in Figur 3 dargestellt ist, für einen gerichteten Empfang der optischen Signale 24 der Lichtquelle 42 vorbereitet werden.

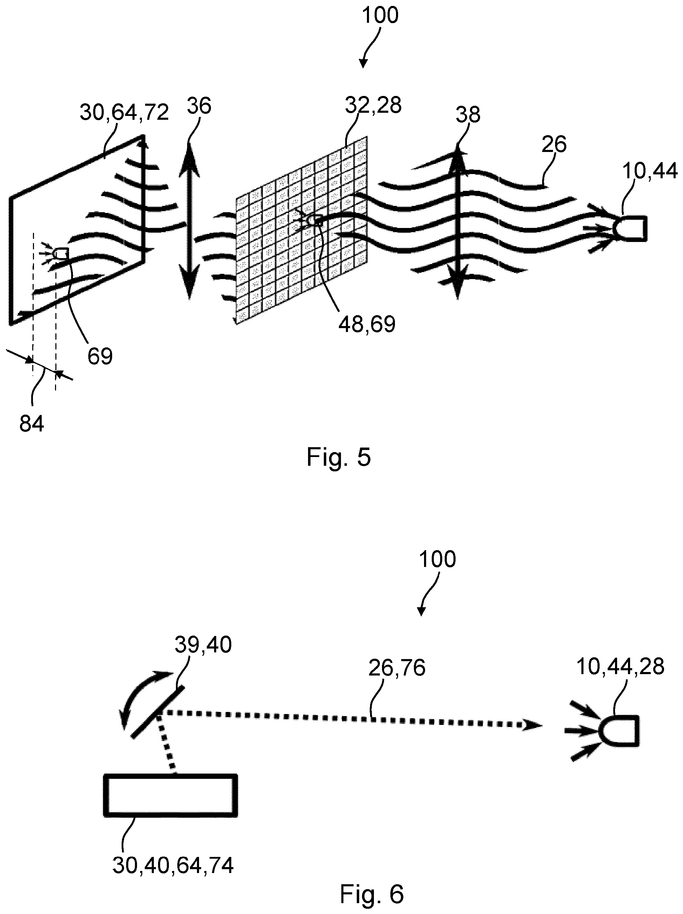

Die Sendeeinheit 30, welche, wie in den Figuren 5 und 6 dargestellt, eine Lichtquelle 72, 74 aufweist, sendet optische Signale 26, welche wiederum von der Empfangsdiode 44 als Empfangseinheit 10 empfangen werden können. Auf diese Weise kann eine bidirektionale optische Kommunikation zwischen der optischen Übertragungseinheit 40 und der Empfangseinheit 10, bzw. der Sendeeinheit 30 hergestellt werden.

Die in den Figuren 2 bis 12 dargestellten Lichtquellen 42, 43, 72, 74 zum Senden optischer Signale 24, 26 und die optische Empfangseinheit 10 zum Empfangen optischer Signale 24, 26 können vorteilhaft für Infrarot-Strahlung, insbesondere nach dem IrDA-Standard, ausgebildet sein.

Die optischen Signale 24 können günstigerweise wenigstens einen Identifikator aufweisen, mittels welchem die optischen Signale 24 zur Verarbeitung und/oder Darstellung vorgefiltert werden.

Figur 3 zeigt eine schematische Darstellung eines Empfangsvorgangs optischer Signale 24 über eine Maskeneinheit 28 des Systems 100 nach einem Ausführungsbeispiel der Erfindung.

Die Figur zeigt den prinzipiellen Aufbau der gerichteten Empfangseinheit 10. Hierbei wird davon ausgegangen, dass die Position der Lichtquelle 42 bekannt ist. Diese wird dann mit einer Optikeinheit 16 auf eine Maskeneinheit 28 abgebildet. Da die Richtung/Position der Lichtquelle 42 bekannt ist, kann die Maskeneinheit 28 an der Position der abgebildeten Lichtquelle 42 wenigstens teilweise weiterleitend geschaltet werden, beispielsweise in einen transparenten Zustand, und das Signal hindurchlassen. Als Maskeneinheit 28 kann z.B. ein wenigstens teilweise weiterleitender Flüssigkristall (TFT)-Bildschirm eingesetzt werden. Der lichtemittierende Bereich 62 der Lichtquelle 42 kann dann direkt oder auch mittels einer weiteren Optikeinheit 18 auf eine bzw. mehrere Fotodioden 70 abgebildet werden.

Sollte die Position der Lichtquelle 42 nicht bekannt sein, ist es auch möglich, durch geschickt alternierend wenigstens teilweise weiterleitend geschaltete Maskeneinheiten 28 relevante Signal-Quellen einzugrenzen und so zu verfolgen.

Das in Figur 3 dargestellte System 100 umfasst die Lichtquelle 42, welche beispielsweise als LED ausgebildet sein kann, zum Senden optischer Signale 24, insbesondere von seriellen optischen Signalen 24. Weiter umfasst das System 100 die optische Empfangseinheit 10 zum Empfangen der optischen Signale 24 der einen Lichtquelle 42, sowie die Maskeneinheit 28, die zwischen der optischen Empfangseinheit 10 und der einen Lichtquelle 42 angeordnet ist.

Die Maskeneinheit 28 weist vorteilhaft eine ortsaufgelöst adressierbare, zumindest bereichsweise zwischen wenigstens teilweise nicht-weiterleitenden und wenigstens teilweise weiterleitenden Zuständen schaltbare dynamische Maske 12 auf.

Eine Optikeinheit 16 ist im Strahlengang zwischen der Lichtquelle 42 und der Maskeneinheit 28 angeordnet.

Eine weitere Optikeinheit 18, welche optional ist, ist im Strahlengang zwischen Empfangseinheit 10 und Maskeneinheit 28 angeordnet.

Die Maskeneinheit 28, welcher als dynamische Maske 12 ausgebildet ist, wird wenigstens bereichsweise zwischen einem wenigstens teilweise nicht-weiterleitenden und wenigstens teilweise weiterleitenden Zustand hin und her geschaltet. Ein Bereich 46 der dynamischen Maske 12 kann dazu frei adressiert werden und so gezielt in einen wenigstens teilweise nicht-weiterleitenden oder in einen wenigstens teilweise weiterleitenden Zustand geschaltet werden. Vorteilhaft kann auch schnell zwischen den beiden Zuständen hin und her geschaltet werden.

Die optische Empfangseinheit 10 kann wenigstens einen Fotodetektor 70 oder eine Anordnung von Fotodetektoren 70, insbesondere ein Array von Fotodioden 70, aufweisen. Mit einer Vielzahl von Fotodetektoren 70 können die optischen Signale 24 in der Empfangseinheit 10 ortsaufgelöst detektiert und einzelnen Lichtquellen 42 auch auf diese Weise, ohne genaue Lokalisation durch eine Lokalisationseinheit 20 zugeordnet werden.

Auf die Maskeneinheit 28 wird ein Abbild 66 wenigstens eines lichtemittierenden Bereichs 62 der einen Lichtquelle 42 abgebildet. Im wenigstens teilweise weiterleitenden Zustand der Maskeneinheit 28 wird dieses Abbild 66 auf die Empfangseinheit 10 weiter abgebildet. Mittels der weiteren Optikeinheit 18 wird das Abbild 66 der Lichtquelle 42 weiter auf die Empfangseinheit 10 abgebildet.

Vorteilhaft kann dabei ein lichter Abstand 84 zwischen der wenigstens einen Maskeneinheit 28 und/oder deren Abbildung auf die wenigstens eine Empfangseinheit 10 und einer Eintrittsapertur der wenigstens einen Empfangseinheit 10 höchstens so groß sein, dass ein Lichtkegel des von der Maskeneinheit 28 weitergeleiteten Abbilds 66, 68 wenigstens eines lichtemittierenden Bereichs 62, 64 der wenigstens einen Lichtquelle 42, 43, 72, 74 höchstens der Eintrittsapertur des wenigstens einen Fotodetektors 70 der Empfangseinheit 10 entspricht. Dadurch lässt sich günstigerweise ein sehr kompaktes System 100 zur optischen Kommunikation realisieren, das Übersprechen zwischen verschiedenen Fotodetektoren 70 der Empfangseinheit 10 vermeidet.

Der Abstand 84, auch als Δz bezeichnet, ergibt sich aus:

$$\Delta z \leq D / (2\sin(\alpha))$$

wobei $\alpha$ der halbe Öffnungswinkel der abgebildeten Lichtquelle 42, 43, 72, 74 ist und D der Durchmesser der Eintrittsapertur des Fotodetektors 70 ist.

Für ein Objektiv mit einer Brennweite f gilt, dass $2\sin(\alpha)$ der Blendenzahl entspricht, also bei Blende f/2 der maximale Abstand dem doppelten Durchmesser D der Eintrittsapertur des Fotodetektors 70 entspricht.

Der lichtemittierende Bereich 62 der Lichtquelle 42 wird auf diese Weise über die Optikeinheit 16 auf die dynamische Maske 12 der Maskeneinheit 28 abgebildet. Die dynamische Maske 12 wird an einem Abschnitt 46, an dem die optischen Signale 24 der Lichtquelle 42 auf die dynamische Maske 12 auftreffen, in den wenigstens teilweise weiterleitenden Zustand geschaltet wird. So können die optischen Signale 24 an die Empfangseinheit 10 durchgeleitet werden.

Über die optionale Optikeinheit 18 wird der auf der dynamischen Maske 12 abgebildete lichtemittierende Bereich 62, wenn die dynamische Maske 12 im wenigstens teilweise weiterleitenden Zustand ist, auf die Empfangseinheit 10 abgebildet und die optischen Signale 24 so weitergeleitet.

In den Ausführungsbeispielen der Figuren 3 und 4 ist jeweils der Abstand 84 zwischen dem auf die Empfangseinheit 10 durch die weitere Optikeinheit 18 abgebildeten Abbilds 66 der Lichtquelle 42 und der Empfangseinheit 10 markiert.

Das vorgeschlagene System 100 bietet wesentliche Vorteile bezüglich einer kompakten Baugröße. Insbesondere wenn die Empfangseinheit 10 unmittelbar an der Maskeneinheit 28 anliegt, kann eine sehr kompakte Baugröße für das System 100 erreicht werden. So kann auch ein großer Akzeptanzwinkel in der Zwischenabbildung der Lichtquelle 42 auf die Maskeneinheit 28 gewährt werden, wodurch kompaktere Systeme 100 möglich sind.

Vorteilhaft entspricht der Abstand 84 zwischen der wenigstens einen Maskeneinheit 28 und/oder deren Abbildung auf die wenigstens eine Empfangseinheit 10 und der Eintrittsapertur der wenigstens einen Empfangseinheit 10 höchstens einem Quotienten aus einem Durchmesser der Eintrittsapertur wenigstens eines Fotodetektors der Empfangseinheit 10 und einer Blendenzahl einer Optikeinheit 16, 18 im Strahlengang zwischen der wenigstens einen Lichtquelle 42 und der wenigstens einen Maskeneinheit 28. In den Figuren 3 und 4 ist der Abstand 84 fast null, da die Optikeinheit 18 die Maskeneinheit 28 auf den Abstand 84 kurz vor oder hinter die Detektorebene der Empfangseinheit 10 abbildet.

Figur 4 zeigt eine schematische Darstellung eines Empfangsvorgangs optischer Signale 24 mit zwei Maskeneinheiten 28 des Systems 100 nach einem weiteren Ausführungsbeispiel der Erfindung.

Die Figur zeigt einen ähnlichen Aufbau wie in Figur 3 dargestellt, bei dem jedoch zwei Maskeneinheiten 28 in Reihe genutzt werden. Dies hat den Vorteil, dass ein höherer Kontrast zur Hintergrundunterdrückung erreicht werden kann, und dass eine einfache Annäherung an eine Fokussierbarkeit der Maskeneinheit 28 erreicht werden kann. Dadurch kann der Kontrast in unterschiedlichen Entfernungen der Lichtquellen 42, 43 auch bei simultaner Erfassung mehrerer Lichtquellen 42, 43 verbessert werden.

Die zwei Maskeneinheiten 28 weisen zwei dynamische Masken 12, 14 auf, die insbesondere separat voneinander ansteuerbar sind. Das System 100 weist zwei Lichtquellen 42, 43 mit lichtemittierenden Bereichen 62 auf.

Ein Abbild 66, 68 des lichtemittierenden Bereichs 62 der beiden Lichtquellen 42, 43 wird auf die beiden dynamischen Masken 12, 14 abgebildet und im wenigstens teilweise weiterleitenden Zustand der Maskeneinheit 28 über die weitere Optikeinheit 18 auf die Empfangseinheit 10 abgebildet und durchgeleitet, wo die optischen Signale 24 der beiden Abbilder 66, 68 von entsprechenden Fotodetektoren 70 empfangen werden.

Die zwei dynamischen Masken 12, 14 können für optische Signale 24 von wenigstens zwei Lichtquellen 42, 43 separat in den wenigstens teilweise weiterleitenden Zustand geschaltet werden. Insbesondere können dabei die optischen Signale 24 der zwei Lichtquellen 42, 43 sequentiell angesteuert werden.

Die zwei Lichtquellen 42, 43 können vorteilhaft simultan mit einer Lokalisierungseinheit 20, insbesondere einer Kamera 22, lokalisiert werden, um die beiden dynamischen Masken 12, 14 an den entsprechenden Bereichen 46, 47 in den wenigstens teilweise weiterleitenden Zustand zu schalten.

Figur 5 zeigt eine schematische Darstellung eines Sendevorgangs optischer Signale 26 über eine Maskeneinheit 28 nach einem weiteren Ausführungsbeispiel der Erfindung. Dabei wird eine Sendeeinheit 30, welche beispielsweise eine Matrix von Leuchtelementen aufweist, nach dem gleichen Prinzip wie eine Maskeneinheit 28 mit einer Empfangseinheit 10 als Sendeeinheit 30 mit Maskeneinheit 28 betrieben. Dabei wird die Sendeeinheit 30 mittels der Optikeinheit 36 auf die Maskeneinheit 28 abgebildet. Abschnitte 48 der Maskeneinheit 28, welche in den weiterleitenden oder teilweise weiterleitenden Zustand geschaltet sind, werden über die weitere Optikeinheit 38 auf die Empfangsdiode 44 der Empfangseinheit 10 abgebildet.

Die Figur 5 zeigt ein Ausführungsbeispiel, welches eine bidirektionale Kommunikation ermöglicht. Hierbei wird das Prinzip der in den vorherigen Figuren 3 und 4 dargestellten Ausführungsbeispiele umgedreht und statt eines Fotodetektors 70 ein Fotoemitter (LED) 72 mit einem lichtemittierenden Bereich 64 verwendet. Der ausgesendete Lichtkegel 26 wird hierbei auf die zu beleuchtende Empfangseinheit 10, welche als Empfangsdiode 44 ausgebildet ist, angepasst, deren Position durch die bereits lokalisierte Lichtquelle 42 in der optischen Übertragungseinheit 40 bereits bekannt ist. Mit einem Array aus Fotoemittern 72 können so mehrere Kommunikationswege gleichzeitig bereitgestellt werden. Der Abstand 84 ist in diesem Fall als Abstand zwischen dem Abbild 69 der Empfangsdiode 44 der Empfangseinheit 10, welches durch die Maskeneinheit 28 im Bereich 48 weitergeleitet wird und über die Optikeinheit 36 auf die Sendeeinheit 30 abgebildet wird, definiert.

Das in der Figur 5 dargestellte System 100 umfasst die Sendeeinheit 30 mit dem einen oder mehreren Fotoemittern 72 als Lichtquellen 72, sowie die als dynamische Maske 32 ausgebildete Maskeneinheit 28 und die als Fotodiode 44 ausgebildete Empfangseinheit 10. Die optischen Signale 26, welche von dem lichtemittierenden Bereich 64 des Fotoemitters 72 ausgestrahlt werden, werden über die optionale Optikeinheit 36 auf einen Bereich 48 der dynamischen Maske 32 abgebildet. Der Bereich 48 wiederum wird über die Optikeinheit 38 auf die Fotodiode 44 der Empfangseinheit 10 abgebildet, sodass die optischen Signale 26, wenn der Bereich 48 der dynamischen Maske 28 in den wenigstens teilweise weiterleitenden Zustand geschaltet wird, auf die Fotodiode 44 weitergeleitet werden. Die optischen Signale 26 der Lichtquelle 72 können so ortsaufgelöst gesendet werden, da über das wenigstens teilweise weiterleitend Schalten des Bereichs 48 ein entsprechender Bereich der Lichtquelle 72, welche beispielsweise als Bildschirm flächig ausgedehnt sein kann, ausgewählt wird.

Durch die Auswahl des wenigstens teilweise weiterleitend zu schaltenden Bereich 48 der dynamischen Maske 32 können die optischen Signale 26 der Lichtquelle 72 auf diese Weise an die optische Empfangseinheit 10 gerichtet gesendet werden.

In Figur 6 ist eine schematische Darstellung eines Sendevorgangs optischer Signale 26 über einen Umlenkspiegel 39 nach einem weiteren Ausführungsbeispiel der Erfindung dargestellt.

Die Figur zeigt eine alternative Variante, in der ein Laseremitter 74 als Lichtquelle 74 der Sendeeinheit 30 und ein elektrisch verstellbarer Umlenkspiegel 39 die rückwärtige Kommunikation an die optische Übertragungseinheit 40 umsetzen.

Das in Figur 6 dargestellte System 100 umfasst eine als Laseremitter 74 realisierte Sendeeinheit 30, deren Laserstrahl 76 über den Umlenkspiegel 39 auf die Fotodiode 44 der Empfangseinheit 10 gerichtet wird. Über die Ausrichtung des Umlenkspiegels 39 können die optischen Signale 26 der Lichtquelle 74 auf die optische Empfangseinheit 10 so gerichtet gesendet werden.

Die in Figur 6 dargestellte Empfangseinheit 10 umfasst als Empfangsmodul neben der Fotodiode 44 zum Empfangen der Lichtstrahlen auch eine Maskeneinheit 28 mit wenigstens einer dynamischen Maske 12. Diese ist nicht gesondert dargestellt.

Durch das gerichtete Senden optischer Signale 26 im Rückkanal der optischen Übertragungseinheit 40 können unerwünschte Kommunikationswege oder Richtungen unterdrückt werden, was eine sichere Kommunikation ermöglicht. Weiterhin kann die Sendeleistung erhöht werden, um unempfindlichere Empfangseinheiten 10 auch aus größerer Entfernung, beispielsweise in einer Größenordnung bis zu zehn Metern, zu erreichen, ohne dabei kritische Leuchtdichten zu überschreiten, die bei zufälligen Passanten zu Augenschädigungen oder Irritationen führen könnten.

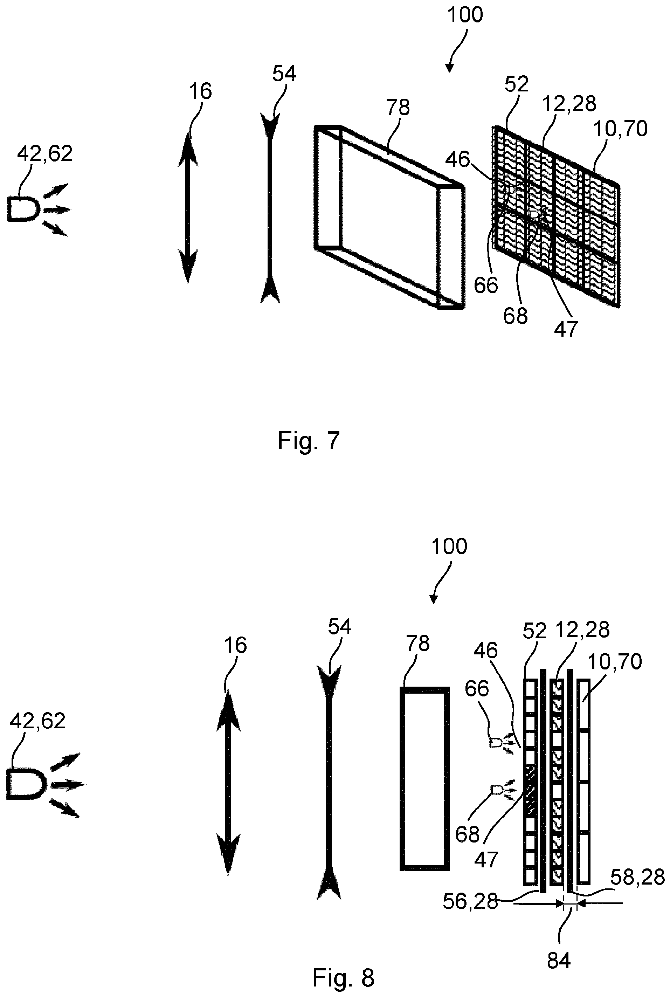

Figur 7 zeigt eine detaillierte Darstellung eines Empfangsvorgangs optischer Signale über eine Maskeneinheit 28 des Systems 100 nach einem weiteren Ausführungsbeispiel der Erfindung mit einem zusätzlichen doppelbrechenden optischen Element 78 sowie einem polarisationsdrehenden Element 52 und einer Lambda/4-Platte 54. Figur 8 zeigt dazu eine Schnittdarstellung des Systems 100 nach Figur 7.

Im Strahlengang zwischen der Optikeinheit 16 und der Maskeneinheit 28 ist ein doppelbrechendes optisches Element 78, gefolgt von einem polarisationsdrehenden Element 52, angeordnet. Durch das doppelbrechende optische Element 78 ergeben sich zwei Abbilder 66. 68 der Lichtquelle 42. Die Maskeneinheit 28 weist ein zwischen einem Polarisator 56 und einem Analysator 58 angeordnete dynamische Maske 12 im üblichen Aufbau eines TFT-Bildschirms auf. Der Abstand 84 zwischen Maskeneinheit 28 und Empfangseinheit 10 ist inklusive der abbildenden Zwischenoptik, der Optikeinheit 16, dargestellt. Tatsächlich ist der Abstand 84 fast null, da die Optikeinheit 16 die Maskeneinheit 28 auf den Abstand 84 kurz vor/nach der Detektorebene der Empfangseinheit 10 abbildet. Zwischen der Optikeinheit 16 und dem doppelbrechenden optischen Element 78 ist beispielhaft ein als Lambda/4-Platte ausgebildetes Verzögerungselement 54 angeordnet.

Um blinde Stellen auf einem Fotodetektorarray der Empfangseinheit 10 zu umgehen, kann ein diffraktives optisches Element 78 vor der Maskeneinheit 28 angeordnet werden. Hierdurch können zwei oder mehr optische Abbilder 66, 68 der Lichtquelle 42 auf unterschiedliche Bereiche des Detektorarrays der Empfangseinheit 10 projiziert werden, sodass zumindest immer ein Abbild einen Fotodetektor auf dessen empfindlicher Apertur beleuchtet. In den Figuren 7 und 8 ist dies durch die beiden Abbilder 66, 68 der Lichtquelle 42 dargestellt, die auf unterschiedliche Abschnitte 46, 47 der Empfangseinheit 10 projiziert sind.

Zur Maximierung der Signaltransmission durch die Maskeneinheit 28 mittels einer LCD-Einheit ist es möglich, das doppelbrechende optische Element 78 mit einem polarisationsdrehenden LCD-Element 52, insbesondere als Lambda/2 Verzögerungselement, zu kombinieren. So können beide Polarisationskomponenten der übertragenen Lichtstrahlen separiert und für die Maskeneinheit 28 fehlangepasste Komponenten in der Polarisation getrennt kontrolliert werden, so dass ein Großteil des Lichts auf die Fotodetektoren trifft.

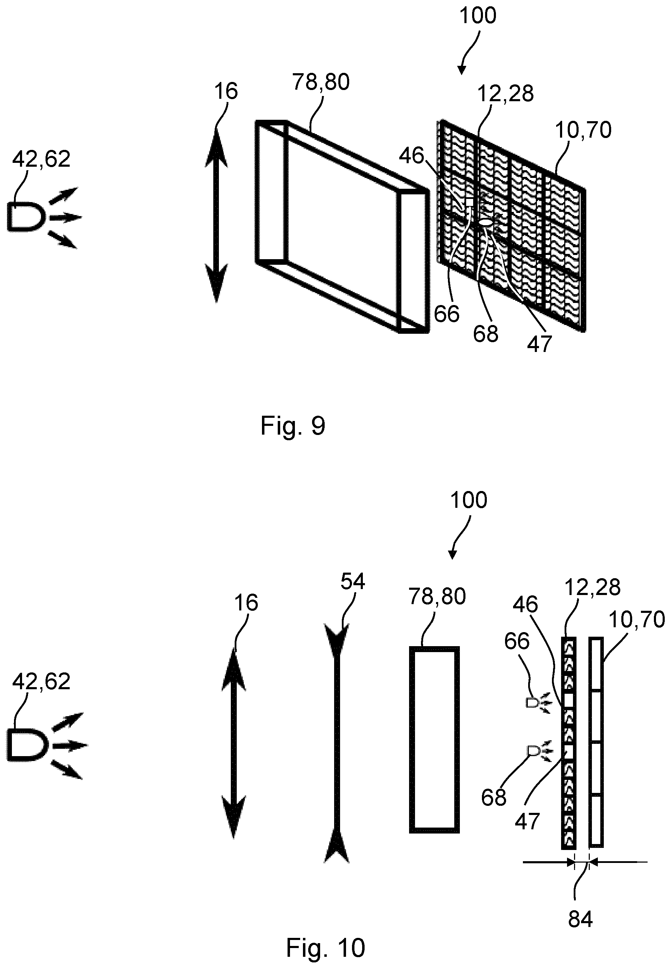

Figur 9 zeigt eine detaillierte Darstellung eines Empfangsvorgangs optischer Signale über eine Maskeneinheit 28 des Systems 100 nach einem weiteren Ausführungsbeispiel der Erfindung mit einem zusätzlichen doppelbrechenden optischen Element 78 oder einem diffraktiven optischen Element 80. Figur 10 zeigt dazu eine Schnittdarstellung des Systems 100 nach Figur 9.

Ein doppelbrechendes optisches Element 78 und/oder ein diffraktives Element 80 ist im Strahlengang zwischen der Optikeinheit 16, 36 und der wenigstens einen Maskeneinheit 28 angeordnet. Dabei kann insbesondere, wie in Figur 10 dargestellt, zwischen der Optikeinheit 16, 36 und dem doppelbrechenden optischen Element 78 und/oder dem diffraktiven optischen Element 80 zusätzlich noch eine optionale Lambda/4-Platte als Verzögerungselement 54 angeordnet sein.

Um blinde Stellen auf einem Fotodetektorarray der Empfangseinheit 10 zu umgehen, ist, ähnlich wie bei dem Ausführungsbeispiel in den Figuren 7 und 8, ein doppelbrechendes optisches Element 78 und/oder ein diffraktives optisches Element 80 vor der Maskeneinheit 28 installiert. Hierdurch können zwei oder mehr optische Abbilder 66, 68 der Lichtquelle 42 auf unterschiedliche Bereiche des Detektorarrays der Empfangseinheit 10 projiziert werden, sodass zumindest immer ein Abbild 66, 68 einen Fotodetektor auf dessen empfindlicher Apertur beleuchtet. In den Figuren 7 und 8 ist dies durch die beiden Abbilder 66, 68 der Lichtquelle 42 dargestellt, die auf unterschiedliche Abschnitte 46, 47 der Empfangseinheit 10 projiziert sind.

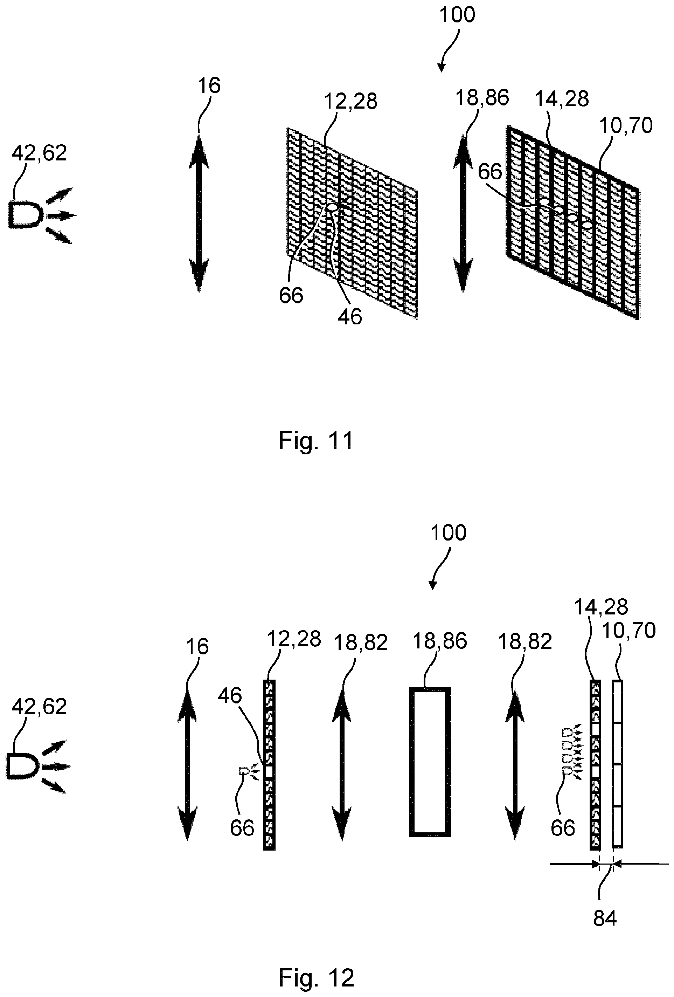

Figur 11 zeigt eine detaillierte Darstellung eines Empfangsvorgangs optischer Signale über zwei Masken 12, 14 einer Maskeneinheit 28 des Systems 100 nach einem weiteren Ausführungsbeispiel der Erfindung mit einem dazwischen angeordneten dispersiven optischen Element 86. Figur 12 zeigt dazu eine Schnittdarstellung des Systems 100 nach Figur 11.

Eine weitere Optikeinheit 18, ist im Strahlengang zwischen den wenigstens zwei dynamischen Masken 12, 14 angeordnet. Die Optikeinheit 18 weist ein dispersives optisches Element 86 zwischen zwei, beispielsweise diffraktiven oder refraktiven optischen Elementen 82 wie einer optischen Linse oder einem Hohlspiegel auf. Die optischen Elemente 82 sind optional und deshalb in Figur 11 nicht dargestellt. Die optischen Elemente 82 können diffraktiv, reflektiv, refraktiv sein.

In diesem Ausführungsbeispiel wird die weitere Optikeinheit 18 um ein dispersives optisches Element 86, beispielsweise ein transmittives oder reflektives Gitter oder ein Prisma, ergänzt. Dies ermöglicht eine spektrale Aufspaltung der Lichtstrahlen auf mehrere Detektoren der Empfangseinheit 10. Dadurch wird das Abbild 66 der Lichtquelle 42 spektral aufgeteilt als spektrales Band auf die Maskeneinheit 28 abgebildet.

Hier kann eine lineare Anordnung von Fotodioden mit einem großen Aspektverhältnis, also in einer länglichen Ausbildung, verwendet werden, um den Abstand der Fotodioden zu minimieren. Je nach Position der Lichtquelle 42 können so alle spektralen Kanäle simultan von den Fotodetektoren empfangen werden. Dies erlaubt es, viele monochromatische Datenkanäle oder weniger polychromatische Datenkanäle mit höherer Bandbreite in derselben Systemarchitektur zu nutzen. Um lediglich gezielt einzelne "Unterkanäle" zu adressieren, ist es auch möglich, eine weitere Abschattungsmaske vor den Fotodetektoren zu installieren und unerwünschte Kanäle zu blockieren. Auf diese Weise kann zudem das Signal-zu-Rauschverhältnis in hellen Umgebungen weiter optimiert werden, ohne auf eine spezielle Wellenlänge festgelegt zu sein.

Bezugszeichen

| | |
|---|---|
| 10 | Empfangseinheit |
| 12 | dynamische Maske |
| 14 | dynamische Maske |
| 16 | Optikeinheit |
| 18 | weitere Optikeinheit |
| 20 | Lokalisationseinheit |
| 22 | Kamera |
| 24 | optisches Signal |
| 26 | optisches Signal |
| 28 | Maskeneinheit |
| 30 | Sendeeinheit |
| 32 | dynamische Maske |
| 36 | Optikeinheit |
| 38 | Optikeinheit |
| 39 | Umlenkspiegel |
| 40 | Übertragungseinheit |
| 42 | Lichtquelle Sendediode |
| 43 | Lichtquelle Sendediode |
| 44 | Empfangsdiode |
| 46 | Abschnitt |
| 47 | Abschnitt |
| 48 | Abschnitt |
| 50 | Datenverarbeitungssystem |
| 52 | Verzögerungselement |
| 54 | Verzögerungselement |
| 56 | Polarisator |
| 58 | Analysator |
| 60 | VR/AR System |
| 62 | lichtemittierender Bereich |
| 64 | lichtemittierender Bereich |
| 66 | Abbildung Lichtquelle |
| 68 | Abbildung Lichtquelle |
| 69 | Abbildung Empfangseinheit |
| 70 | Fotodetektor |
| 72 | Fotoemitter |
| 74 | Laseremitter |
| 76 | Laserstrahl |
| 78 | doppelbrechendes optisches Element |
| 80 | diffraktives optisches Element |
| 82 | Linse/Hohlspiegel |
| 84 | Abstand |
| 86 | dispersives optisches Element |
| 100 | System |

**Patentansprüche**

1. System (100) zur optischen Kommunikation, umfassend

   - wenigstens eine Lichtquelle (42, 43, 72, 74) zum Senden optischer Signale (24, 26), insbesondere von seriellen optischen Signalen (24, 26);
   - wenigstens eine optische Empfangseinheit (10) zum Empfangen der optischen Signale (24, 26) der wenigstens einen Lichtquelle (42, 43, 72, 74), wobei die optische Empfangseinheit (10) wenigstens einen Fotodetektor (70) aufweist;
   - wenigstens eine Maskeneinheit (28), die zwischen der optischen Empfangseinheit (10) und der wenigstens einen Lichtquelle (42, 43, 72, 74) angeordnet ist, und die wenigstens bereichsweise zwischen einem wenigstens teilweise optisch nicht-weiterleitenden und wenigstens teilweise optisch weiterleitenden Zustand hin und her schaltbar ausgebildet ist, wobei auf die wenigstens eine Maskeneinheit (28) ein Abbild (66, 68) wenigstens eines lichtemittierenden Bereichs (62, 64) der wenigstens einen Lichtquelle (42, 43, 72, 74) abbildbar und im wenigstens teilweise weiterleitenden Zustand der wenigstens einen Maskeneinheit (28) an die Empfangseinheit (10) leitbar ist, wobei ein lichter Abstand (84) zwischen der wenigstens einen Maskeneinheit (28) und/oder deren Abbildung auf die wenigstens eine Empfangseinheit (10) und einer Eintrittsapertur der wenigstens einen Empfangseinheit (10) höchstens so groß ist, dass ein Lichtkegel des von der Maskeneinheit (28) weitergeleiteten Abbilds (66, 68) wenigstens eines lichtemittierenden Bereichs (62, 64) der wenigstens einen Lichtquelle (42, 43, 72, 74) höchstens der Eintrittsapertur des wenigstens einen Fotodetektors (70) der Empfangseinheit (10) entspricht, **dadurch gekennzeichnet dass** zur Abbildung des wenigstens einen lichtemittierenden Bereichs (62, 64) der wenigstens einen Lichtquelle (42, 43, 72, 74) auf die Maskeneinheit (28) eine Optikeinheit (16, 36) im Strahlengang zwischen der wenigstens einen Lichtquelle (42, 43, 72, 74) und der wenigstens einen Maskeneinheit (28) angeordnet ist.

2. System nach Anspruch 1, wobei wenigstens eine Lokalisationseinheit (20), insbesondere Kamera (22), zur Lokalisation der wenigstens einen Lichtquelle (42, 43, 72, 74) vorgesehen ist.

3. System nach Anspruch 1 oder 2, wobei die wenigstens eine Maskeneinheit (28) wenigstens eine ortsaufgelöst adressierbare, zumindest bereichsweise zwischen wenigstens teilweise optisch nicht-weiterleitenden und wenigstens teilweise optisch weiterleitenden Zuständen schaltbare dynamische Maske (12, 14, 32) aufweist.

4. System nach einem der vorhergehenden Ansprüche, wobei ein doppelbrechendes optisches Element (78) und/oder ein diffraktives optisches Element (80) im Strahlengang zwischen der Optikeinheit (16, 36) und der wenigstens einen Maskeneinheit (28) angeordnet ist, insbesondere wobei zwischen der Optikeinheit (16, 36) und dem doppelbrechenden optischen Element (78) und/oder dem diffraktiven optischen Element (80) ein Verzögerungselement (54) angeordnet ist.

5. System nach einem der vorhergehenden Ansprüche, wobei im Strahlengang zwischen der Optikeinheit (16, 36) und der wenigstens einen Maskeneinheit (28) ein doppelbrechendes optisches Element (78), gefolgt von einem polarisationsdrehenden Element (52), angeordnet ist, insbesondere wobei die Maskeneinheit (28) wenigstens einen Polarisator (56) gefolgt von einer dynamischen Maske (12), gefolgt von einem Analysator (58) aufweist, insbesondere wobei zwischen der Optikeinheit (16, 36) und dem doppelbrechenden optischen Element (78) und/oder dem diffraktiven optischen Element (80) ein Verzögerungselement (54) angeordnet ist, insbesondere wobei das polarisationsdrehende Element (52) in die dynamische Maske (12) integriert ist.

6. System nach einem der vorhergehenden Ansprüche, wobei eine weitere Optikeinheit (18, 38) im Strahlengang zwischen der Empfangseinheit (10) und der wenigstens einen Maskeneinheit (28) angeordnet ist.

7. System nach einem der vorhergehenden Ansprüche, wobei die wenigstens eine Maskeneinheit (28) wenigstens zwei dynamische Masken (12, 14) aufweist, insbesondere wenigstens zwei separat voneinander ansteuerbare dynamische Masken (12, 14), insbesondere wobei wenigstens eine weitere Optikeinheit (18, 38) im Strahlengang vor der wenigstens einen dynamischen Maske (12) und/oder nach der wenigstens einen dynamischen Maske (12) oder zwischen wenigstens zwei dynamischen Masken (12, 14) angeordnet ist, insbesondere wobei die Optikeinheit (18, 38) wenigstens ein dispersives optisches Element (86) zwischen zwei diffraktiven oder refraktiven optischen Elementen (82) aufweist.

8. System nach einem der vorhergehenden Ansprüche, wobei die wenigstens eine Lichtquelle (42, 43, 72, 74) wenigstens eine LED (42, 43) und/oder wenigstens einen Fotoemitter (72) und/oder wenigstens einen Laseremitter (74) aufweist und/oder

   wobei die wenigstens eine Lichtquelle (42, 43, 72, 74) zum Senden und die optische Empfangseinheit (10) zum Empfangen optischer Signale (24, 26) als Infrarot-Strahlung ausgebildet sind, und/oder
   wobei die optische Empfangseinheit (10) eine Anordnung von Fotodetektoren (70), insbesondere ein Array von Fotodioden (70), aufweist.

9. System nach einem der vorhergehenden Ansprüche, wobei die wenigstens eine Maskeneinheit (28) als dynamische Maske (12, 14, 32) wenigstens einen Flüssigkristall-Schirm aufweist.

10. System nach einem der vorhergehenden Ansprüche, wobei die optischen Signale (24, 26) wenigstens einen Identifikator zur Verarbeitung und/oder Darstellung der optischen Signale (24, 26) aufweisen.

11. System nach einem der vorhergehenden Ansprüche, wobei wenigstens eine Lichtquelle (42, 43, 72, 74) zum Senden optischer Signale (24, 26) und die wenigstens eine optische Empfangseinheit (10) in einer optischen Übertragungseinheit (40) integriert sind.

12. Verfahren zur optischen Kommunikation mit einem System (100) nach einem der vorhergehenden Ansprüche, wobei

   - wenigstens eine Lichtquelle (42, 43, 72, 74) optische Signale (24, 26) aussendet, insbesondere serielle optische Signale (24, 26);
   - wenigstens eine optische Empfangseinheit (10) die optischen Signale (24, 26) empfängt, wobei die optische Empfangseinheit (10) wenigstens einen Fotodetektor (70) aufweist,

   wobei auf wenigstens eine Maskeneinheit (28), die zwischen der optischen Empfangseinheit (10) und der wenigstens einen Lichtquelle (42, 43, 72, 74) angeordnet ist, und die wenigstens bereichsweise zwischen einem wenigstens teilweise optisch nicht-weiterleitenden und wenigstens teilweise optisch weiterleitenden Zustand hin und her umgeschaltet werden kann, ein Abbild (66, 68) wenigstens eines lichtemittierenden Bereichs (62, 64) der wenigstens einen Lichtquelle (42, 43, 72, 74) abgebildet und im wenigstens teilweise weiterleitenden Zustand der wenigstens einen Maskeneinheit (28) an die Empfangseinheit (10) geleitet wird,

wobei ein lichter Abstand (84) zwischen der wenigstens einen Maskeneinheit (28) und einer Eintrittsapertur der wenigstens einen Empfangseinheit (10) höchstens so groß gewählt wird, dass ein Lichtkegel des von der Maskeneinheit (28) weitergeleiteten Abbilds (66, 68) der wenigstens einen Lichtquelle (42, 43, 72, 74) höchstens der Eintrittsapertur wenigstens des Fotodetektors (70) der Empfangseinheit (10) entspricht, **dadurch gekennzeichnet dass** zur Abbildung des wenigstens einen lichtemittierenden Bereichs (62, 64) der wenigstens einen Lichtquelle (42, 43, 72, 74) eine Optikeinheit (16, 36) im Strahlengang zwischen der wenigstens einen Lichtquelle (42, 43, 72, 74) und der wenigstens einen Maskeneinheit (28) angeordnet wird.

13. Verfahren nach Anspruch 12, wobei die wenigstens eine Lichtquelle (42, 43, 72, 74) durch eine Lokalisierungseinheit (20), insbesondere eine Kamera (22), lokalisiert wird.

14. Verfahren nach Anspruch 12 oder 13, wobei zumindest ein lichtemittierender Bereich (62, 64) der wenigstens einen Lichtquelle (42, 43, 72, 74) über wenigstens eine Optikeinheit (16, 36) auf wenigstens eine dynamische Maske (12, 14, 32) der wenigstens einen Maskeneinheit (28) abgebildet wird, und die dynamische Maske (12, 14, 32) an einem Abschnitt (46, 47, 48), an dem die optischen Signale (24, 26) der wenigstens einen Lichtquelle (42, 43, 72, 74) auf die wenigstens eine dynamische Maske (12, 14, 32) auftreffen, in den wenigstens teilweise weiterleitenden Zustand geschaltet wird, insbesondere wobei zwei oder mehr Abbilder (66, 68) des lichtemittierenden Bereichs (62, 64) der wenigstens einen Lichtquelle (42, 43, 72, 74) über ein doppelbrechendes optisches Element (78) und/oder ein diffraktives optisches Element (80) im Strahlengang zwischen der Optikeinheit (16, 36) und der wenigstens einen Maskeneinheit (28) als separate Abbilder (66, 68) auf verschiedene Abschnitte (46, 47) der Maskeneinheit (28) abgebildet werden, insbesondere wobei die zwei oder mehr Abbilder (66, 68) über ein zwischen der Optikeinheit (16, 36) und dem doppelbrechenden optischen Element (78) und/oder dem diffraktiven optischen Element (80) angeordneten Verzögerungselement (54) abgebildet werden.

15. Verfahren nach Anspruch 13 oder 14, wobei für die Maskeneinheit (28) in der Polarisation fehlangepasste Abbilder (66, 68) des lichtemittierenden Bereichs (62, 64) der wenigstens einen Lichtquelle (42, 43, 72, 74) über ein doppelbrechendes optisches Element (78) gefolgt von einem polarisationsdrehenden Element (52) im Strahlengang zwischen der Optikeinheit (16, 36) und der wenigstens einen Maskeneinheit (28) getrennt an die Maskeneinheit (28) optisch weitergeleitet werden, wobei die Maskeneinheit (28) wenigstens einen Polarisator (56) gefolgt von einer dynamischen Maske (12), gefolgt von einem Analysator (58) aufweist, insbesondere wobei zwischen der Optikeinheit (16, 36) und dem doppelbrechenden optischen Element (78) und/oder dem diffraktiven optischen Element (80) eine Verzögerungselement (54) angeordnet ist.

16. Verfahren nach Anspruch 14 oder 15, wobei unterschiedlich zirkular polarisierte Abbilder (66, 68) des lichtemittierenden Bereichs (62, 64) der wenigstens einen Lichtquelle (42, 43, 72, 74) über eine zwischen der Optikeinheit (16, 36) und dem doppelbrechenden optischen Element (78) und/oder dem diffraktiven optischen Element (80) angeordnetes Verzögerungselement (54) getrennt an die Maskeneinheit (28) optisch weitergeleitet werden.

17. Verfahren nach einem der Ansprüche 12 bis 16, wobei wenigstens zwei dynamische Masken (12, 14) der wenigstens einen Maskeneinheit (28) für optische Signale (24, 26) von wenigstens zwei Lichtquellen (42, 43, 72, 74) separat in den wenigstens teilweise weiterleitenden Zustand geschaltet werden, insbesondere wobei die optischen Signale (24, 26) der wenigstens zwei Lichtquellen (42, 43, 72, 74) sequentiell angesteuert werden, insbesondere wobei die wenigstens zwei Lichtquellen (42, 43, 72, 74) simultan mit der Lokalisierungseinheit (20), insbesondere Kamera (22), lokalisiert werden.

18. Verfahren nach Anspruch 17, wobei eine spektrale Aufspaltung die optischen Signale (24, 26) der wenigstens einen Lichtquelle (42, 43, 72, 74) über wenigstens eine weitere Optikeinheit (18, 38) im Strahlengang vor der wenigstens einen dynamischen Maske (12) und/oder nach der wenigstens einen dynamischen Maske (12) oder zwischen wenigstens zwei dynamischen Masken (12, 14) erfolgt, insbesondere wobei eine spektrale Aufspaltung die optischen Signale (24, 26) der wenigstens einen Lichtquelle (42, 43, 72, 74) über wenigstens ein dispersives optisches Element (86) zwischen zwei diffraktiven oder refraktiven optischen Elementen (82) der Optikeinheit (18, 38) erfolgt, wobei das Abbild (66, 68) des lichtemittierenden Bereichs (62, 64) der wenigstens einen Lichtquelle (42, 43, 72, 74) spektral aufgelöst auf die zweite dynamische Maske (14) abgebildet wird.

**19.** Verfahren nach einem der Ansprüche 12 bis 18, wobei die optischen Signale (24, 26) der wenigstens einen Lichtquelle (42, 43, 72, 74) ortsaufgelöst gesendet werden und/oder

wobei die optischen Signale (24, 26) der wenigstens einen Lichtquelle (42, 43, 72, 74) in einem Datenverarbeitungssystem (50) ausgewertet werden, insbesondere auf einem System für virtuelle und/oder erweiterte Realität (60) dargestellt werden und/oder

wobei die optischen Signale (24, 26) der wenigstens einen Lichtquelle (42, 43, 72, 74) mittels wenigstens eines Identifikators verarbeitet und/oder dargestellt werden.

**Claims**

**1.** System (100) for optical communication, comprising

- at least one light source (42, 43, 72, 74) for transmitting optical signals (24, 26), in particular serial optical signals (24, 26);
- at least one optical receiving unit (10) for receiving the optical signals (24, 26) of the at least one light source (42, 43, 72, 74), wherein the optical receiving unit (10) has at least one photodetector (70);
- at least one mask unit (28), which is arranged between the optical receiving unit (10) and the at least one light source (42, 43, 72, 74) and which is embodied so as to be switchable back and forth at least in regions between an at least partially optically non-forwarding and at least partially optically forwarding state, wherein an image representation (66, 68) of at least one light-emitting region (62, 64) of the at least one light source (42, 43, 72, 74) is imageable onto the at least one mask unit (28) and is guidable to the receiving unit (10) in the at least partially forwarding state of the at least one mask unit (28), wherein a clear distance (84) between the at least one mask unit (28) and/or the imaging thereof onto the at least one receiving unit (10) and an entrance aperture of the at least one receiving unit (10) is at most so large that a light cone of the image representation (66, 68) of at least one light-emitting region (62, 64) of the at least one light source (42, 43, 72, 74), which image representation is forwarded by the mask unit (28), corresponds at most to the entrance aperture of the at least one photodetector (70) of the receiving unit (10), **characterized in that**, for imaging the at least one light-emitting region (62, 64) of the at least one light source (42, 43, 72, 74) onto the mask unit (28), an optical unit (16, 36) is arranged in the beam path between the at least one light source (42, 43, 72, 74) and the at least one mask unit (28).

**2.** System according to Claim 1, wherein at least one localization unit (20), in particular a camera (22), is provided for localizing the at least one light source (42, 43, 72, 74).

**3.** System according to Claim 1 or 2, wherein the at least one mask unit (28) has at least one dynamic mask (12, 14, 32), which is addressable in a spatially resolved manner and is switchable at least in regions between at least partially optically non-forwarding states and at least partially optically forwarding states.

**4.** System according to one of the preceding claims, wherein a birefringent optical element (78) and/or a diffractive optical element (80) is arranged in the beam path between the optical unit (16, 36) and the at least one mask unit (28), in particular wherein a retardation element (54) is arranged between the optical unit (16, 36) and the birefringent optical element (78) and/or the diffractive optical element (80).

**5.** System according to one of the preceding claims, wherein a birefringent optical element (78), followed by a polarization-rotating element (52), is arranged in the beam path between the optical unit (16, 36) and the at least one mask unit (28), in particular wherein the mask unit (28) has at least one polarizer (56), followed by a dynamic mask (12), followed by an analyser (58), in particular wherein a retardation element (54) is arranged between the optical unit (16, 36) and the birefringent optical element (78) and/or the diffractive optical element (80), in particular wherein the polarization-rotating element (52) is integrated in the dynamic mask (12).

**6.** System according to one of the preceding claims, wherein a further optical unit (18, 38) is arranged in the beam path between the receiving unit (10) and the at least one mask unit (28).

**7.** System according to one of the preceding claims, wherein the at least one mask unit (28) has at least two dynamic masks (12, 14), in particular at least two dynamic masks (12, 14) which are actuable separately from one another, in particular wherein at least one further optical unit (18, 38) is arranged in the beam path upstream of the at least one dynamic mask (12) and/or downstream of the at least one dynamic mask (12) or between at least two dynamic masks (12, 14), in particular wherein the optical unit (18, 38) has at least one dispersive optical element (86) between two diffractive or refractive optical elements (82).

8. System according to one of the preceding claims, wherein the at least one light source (42, 43, 72, 74) has at least one LED (42, 43) and/or at least one photo emitter (72) and/or at least one laser emitter (74), and/or

   wherein the at least one light source (42, 43, 72, 74) is designed to transmit and the optical receiving unit (10) is designed to receive optical signals (24, 26) as infrared radiation, and/or wherein the optical receiving unit (10) has an arrangement of photodetectors (70), in particular an array of photodiodes (70).

9. System according to one of the preceding claims, wherein the at least one mask unit (28) has at least one liquid crystal screen as a dynamic mask (12, 14, 32).

10. System according to one of the preceding claims, wherein the optical signals (24, 26) have at least one identifier for processing and/or representing the optical signals (24, 26).

11. System according to one of the preceding claims, wherein at least one light source (42, 43, 72, 74) for transmitting optical signals (24, 26) and the at least one optical receiving unit (10) are integrated in an optical transmission unit (40).

12. Method for optical communication with a system (100) according to one of the preceding claims, wherein

   - at least one light source (42, 43, 72, 74) emits optical signals (24, 26), in particular serial optical signals (24, 26);
   - at least one optical receiving unit (10) receives the optical signals (24, 26), wherein the optical receiving unit (10) has at least one photodetector (70),

   wherein an image representation (66, 68) of at least one light-emitting region (62, 64) of the at least one light source (42, 43, 72, 74) is imaged onto at least one mask unit (28), which is arranged between the optical receiving unit (10) and the at least one light source (42, 43, 72, 74) and which can be switched back and forth at least in regions between an at least partially optically non-forwarding and at least partially optically forwarding state, and is guided to the receiving unit (10) in the at least partially forwarding state of the at least one mask unit (28),

   wherein a clear distance (84) between the at least one mask unit (28) and an entrance aperture of the at least one receiving unit (10) is selected to be at most so large that a light cone of the image representation (66, 68) of the at least one light source (42, 43, 72, 74) forwarded by the mask unit (28) corresponds at most to the entrance aperture of at least the photodetector (70) of the receiving unit (10),
   **characterized in that**, for imaging the at least one light-emitting region (62, 64) of the at least one light source (42, 43, 72, 74), an optical unit (16, 36) is arranged in the beam path between the at least one light source (42, 43, 72, 74) and the at least one mask unit (28).

13. Method according to Claim 12, wherein the at least one light source (42, 43, 72, 74) is localized by a localization unit (20), in particular a camera (22).

14. Method according to Claim 12 or 13, wherein at least one light-emitting region (62, 64) of the at least one light source (42, 43, 72, 74) is imaged onto at least one dynamic mask (12, 14, 32) of the at least one mask unit (28) via at least one optical unit (16, 36) and the dynamic mask (12, 14, 32) is switched into the at least partially forwarding state at a section (46, 47, 48) at which the optical signals (24, 26) of the at least one light source (42, 43, 72, 74) are incident on the at least one dynamic mask (12, 14, 32), in particular

   wherein two or more image representations (66, 68) of the light-emitting region (62, 64) of the at least one light source (42, 43, 72, 74) are imaged as separate image representations (66, 68) via a birefringent optical element (78) and/or a diffractive optical element (80) in the beam path between the optical unit (16, 36) and the at least one mask unit (28) onto different sections (46, 47) of the mask unit (28), in particular wherein the two or more image representations (66, 68) are imaged via a retardation element (54) arranged between the optical unit (16, 36) and the birefringent optical element (78) and/or the diffractive optical element (80).

15. Method according to Claim 13 or 14, wherein image representations (66, 68) of the light-emitting region (62, 64) of the at least one light source (42, 43, 72, 74) that are mismatched in polarization for the mask unit (28) are optically forwarded separately to the mask unit (28) via a birefringent optical element (78) followed by a polarization-rotating element (52) in the beam path between the optical unit (16, 36) and the at least one mask unit (28), wherein the mask unit (28) has at least one polarizer (56) followed by a dynamic mask (12) followed by an analyser (58), in particular wherein a retardation element (54) is arranged between the optical unit (16, 36) and the birefringent optical element (78) and/or the diffractive optical element (80).

16. Method according to Claim 14 or 15, wherein differently circularly polarized image representations (66, 68) of the light-emitting region (62, 64) of the at least one light source (42, 43, 72, 74) are optically forwarded separately via a retardation element (54) arranged between the optical unit (16, 36) and the birefringent optical element (78) and/or the diffractive optical element (80) to the mask unit (28).

17. Method according to one of Claims 12 to 16, wherein at least two dynamic masks (12, 14) of the at least one mask unit (28) for optical signals (24, 26) from at least two light sources (42, 43, 72, 74) are switched separately into the at least partially forwarding state, in particular wherein the optical signals (24, 26) of the at least two light sources (42, 43, 72, 74) are actuated sequentially, in particular
wherein the at least two light sources (42, 43, 72, 74) are localized simultaneously with the localization unit (20), in particular camera (22).

18. Method according to Claim 17, wherein a spectral splitting of the optical signals (24, 26) of the at least one light source (42, 43, 72, 74) takes place via at least one further optical unit (18, 38) in the beam path upstream of the at least one dynamic mask (12) and/or downstream of the at least one dynamic mask (12) or between at least two dynamic masks (12, 14), in particular wherein a spectral splitting of the optical signals (24, 26) of the at least one light source (42, 43, 72, 74) takes place via at least one dispersive optical element (86) between two diffractive or refractive optical elements (82) of the optical unit (18, 38), wherein the image representation (66, 68) of the light-emitting region (62, 64) of the at least one light source (42, 43, 72, 74) is imaged spectrally resolved onto the second dynamic mask (14).

19. Method according to one of Claims 12 to 18, wherein the optical signals (24, 26) of the at least one light source (42, 43, 72, 74) are transmitted spatially resolved and/or

wherein the optical signals (24, 26) of the at least one light source (42, 43, 72, 74) are evaluated in a data processing system (50), in particular are represented on a system for virtual and/or augmented reality (60), and/or
wherein the optical signals (24, 26) of the at least one light source (42, 43, 72, 74) are processed and/or represented by means of at least one identifier.

## Revendications

1. Système (100) de communication optique, comprenant

   - au moins une source de lumière (42, 43, 72, 74) destinée à émettre des signaux optiques (24, 26), notamment des signaux optiques série (24, 26) ;
   - au moins une unité de réception optique (10) destinée à recevoir les signaux optiques (24, 26) de ladite au moins une source de lumière (42, 43, 72, 74), l'unité de réception optique (10) comportant au moins un photodétecteur (70) ;
   - au moins une unité de masque (28), qui est agencée entre l'unité de réception optique (10) et ladite au moins une source de lumière (42, 43, 72, 74), et qui est conçue pour pouvoir commuter au moins par zones en va-et-vient entre un état au moins partiellement optiquement non transmissif et un état au moins partiellement optiquement transmissif,

   une image (66, 68) d'au moins une zone d'émission de lumière (62, 64) de ladite au moins une source de lumière (42, 43, 72, 74) pouvant être formée sur ladite au moins une unité de masque (28) et pouvant être retransmise à l'unité de réception (10) dans l'état au moins partiellement transmissif de ladite au moins une unité de masque (28), un écart lumineux (84) entre ladite au moins une unité de masque (28) et/ou son image formée sur ladite au moins une unité de réception (10) et une ouverture d'entrée de ladite au moins une unité de réception (10) étant au maximum tel qu'un cône de lumière de l'image (66, 68) transmise par l'unité de masque (28) d'au moins une zone d'émission de lumière (62, 64) de ladite au moins une source de lumière (42, 43, 72, 74) corresponde au maximum à l'ouverture d'entrée dudit au moins un photodétecteur (70) de l'unité de réception (10),
   **caractérisé en ce qu'**une unité optique (16, 36) est agencée sur le chemin de faisceau entre ladite au moins une source de lumière (42, 43, 72, 74) et ladite au moins une unité de masque (28) pour la formation d'image d'au moins une zone d'émission de lumière (62, 64) de ladite au moins une source de lumière (42, 43, 72, 74) sur l'unité de masque (28).

2. Système selon la revendication 1, dans lequel au moins une unité de localisation (20), notamment une caméra (22), est prévue pour la localisation de ladite au moins une source de lumière (42, 43, 72, 74).

3. Système selon la revendication 1 ou 2, dans lequel ladite au moins une unité de masque (28) comporte au moins un masque dynamique (12, 14, 32) adressable spatialement, et commutable au moins par zones entre des états au moins partiellement optiquement non transmissifs et des états au moins partiellement optiquement transmissifs.

4. Système selon l'une quelconque des revendications précédentes, dans lequel un élément optique biréfringent (78) et/ou un élément optique diffractant (80) est agencé sur le chemin de faisceau entre l'unité optique (16, 36) et ladite au moins une unité de masque (28), un élément à retard (54) étant notamment agencé entre l'unité optique (16, 36) et l'élément optique biréfringent (78) et/ou l'élément optique diffractant (80).

5. Système selon l'une quelconque des revendications précédentes, dans lequel un élément optique biréfringent (78) est agencé sur le chemin de faisceau entre l'unité optique (16, 36) et ladite au moins une unité de masque (28), et est suivi d'un élément rotateur de polarisation (52), l'unité de masque (28) comportant notamment au moins un polariseur (56) suivi d'un masque dynamique (12), suivi d'un analyseur (58),
un élément à retard (54) étant notamment agencé entre l'unité optique (16, 36) et l'élément optique biréfringent (78) et/ou l'élément optique diffractant (80), l'élément rotateur de polarisation (52) étant notamment intégré au masque dynamique (12).

6. Système selon l'une quelconque des revendications précédentes, dans lequel une unité optique supplémentaire (18, 38) est agencée sur le chemin de faisceau entre l'unité de réception (10) et ladite au moins une unité de masque (28).

7. Système selon l'une quelconque des revendications précédentes, dans lequel ladite au moins une unité de masque (28) comporte au moins deux masques dynamiques (12, 14), notamment au moins deux masques dynamiques (12, 14) pouvant être attaqués séparément l'un de l'autre, au moins une unité optique supplémentaire (18, 38) étant notamment agencée sur le chemin de faisceau avant ledit au moins un masque dynamique (12) et/ou après ledit au moins un masque dynamique (12) ou entre au moins deux masques dynamiques (12, 14), l'unité optique (18, 38) comportant notamment au moins un élément optique dispersif (86) entre deux éléments optiques diffractants ou réfractants (82).

8. Système selon l'une quelconque des revendications précédentes, dans lequel ladite au moins une source de lumière (42, 43, 72, 74) comporte au moins une LED (42, 43) et/ou au moins un photoémetteur (72) et/ou au moins un émetteur laser (74) et/ou

dans lequel ladite au moins une source de lumière (42, 43, 72, 74) destinée à l'émission et l'unité de réception optique (10) destinée à la réception de signaux optiques (24, 26) sont conçues sous forme de rayonnement infrarouge, et/ou
dans lequel l'unité de réception optique (10) comporte un agencement de photodétecteurs (70), notamment un réseau de photodiodes (70).

9. Système selon l'une quelconque des revendications précédentes, dans lequel ladite au moins une unité de masque (28) sous forme de masque dynamique (12, 14, 32) comporte au moins un écran à cristaux liquides.

10. Système selon l'une quelconque des revendications précédentes, dans lequel les signaux optiques (24, 26) comportent au moins un identifiant pour le traitement et/ou la représentation des signaux optiques (24, 26).

11. Système selon l'une quelconque des revendications précédentes, dans lequel au moins une source de lumière (42, 43, 72, 74) destinée à émettre des signaux optiques (24, 26) et ladite au moins une unité de réception optique (10) sont intégrées dans une unité de transmission optique (40).

12. Procédé de communication optique comprenant un système (100) selon l'une quelconque des revendications précédentes, dans lequel

- au moins une source de lumière (42, 43, 72, 74) émet des signaux optiques (24, 26), notamment des signaux optiques série (24, 26) ;
- au moins une unité de réception optique (10) reçoit les signaux optiques (24, 26), l'unité de réception optique (10) comportant au moins un photodétecteur (70) ;
une image (66, 68) d'au moins une zone d'émission de lumière (62, 64) de ladite au moins une source de lumière (42, 43, 72, 74) étant formée sur au moins une unité de masque (28), laquelle est agencée entre l'unité de réception optique (10) et ladite au moins une source de lumière (42, 43, 72, 74) et peut être commutée en va-et-vient au moins par zones entre un état au moins partiellement optiquement non transmissif et un état au moins partiellement optiquement transmissif, et est retransmise à l'unité de réception (10) dans l'état au moins partiellement transmissif de ladite au moins une unité de masque (28) ;
un écart lumineux (84) entre ladite au moins une unité de masque (28) et une ouverture d'entrée de ladite au moins une unité de réception (10) étant choisi à une valeur suffisamment élevée pour qu'un cône de lumière de l'image (66, 68) retransmise par l'unité de masque (28) de ladite au moins une source de lumière (42, 43, 72, 74) corresponde au maximum à l'ouverture d'entrée d'au moins le photodétecteur (70) de l'unité de réception (10) ;

**caractérisé en ce que**, pour la formation d'image de ladite au moins une zone d'émission de lumière (62, 64) de ladite au moins une source de lumière (42, 43, 72, 74), une unité optique (16, 36) est agencée sur le chemin de faisceau entre ladite au moins une source de lumière (42, 43, 72, 74) et ladite au moins une unité de masque (28).

13. Procédé selon la revendication 12, dans lequel ladite au moins une source de lumière (42, 43, 72, 74) est localisée par une unité de localisation (20), notamment une caméra (22).

14. Procédé selon la revendication 12 ou 13, dans lequel l'image d'au moins une zone d'émission de lumière (62, 64) de ladite au moins une source de lumière (42, 43, 72, 74) est formée par l'intermédiaire d'au moins une unité optique (16, 36) sur au moins un masque dynamique (12, 14, 32) de ladite au moins une unité de masque (28), et le masque dynamique (12, 14, 32) est commuté à un état au moins partiellement transmissif au niveau d'une section (46, 47, 48) où les signaux optiques (24, 26) provenant de ladite au moins une source de lumière (42, 43, 72, 74) sont incidents sur ledit au moins un masque dynamique (12, 14, 32), notamment dans lequel deux images ou plus (66, 68) de la zone d'émission de lumière (62, 64) de ladite au moins une source de lumière (42, 43, 72, 74) sont formées par l'intermédiaire d'un élément optique biréfringent (78) et/ou d'un élément optique diffractant (80) sur le chemin de faisceau entre l'unité optique (16, 36) et ladite au moins une unité de masque (28) sous forme d'images séparées (66, 68) sur différentes sections (46, 47) de l'unité de masque (28), notamment les deux images ou plus (66, 68) étant formées par l'intermédiaire d'un élément à retard (54) agencé entre l'unité optique (16, 36) et l'élément optique biréfringent (78) et/ou l'élément optique diffractant (80).

15. Procédé selon la revendication 13 ou 14, dans lequel, pour l'unité de masque (28), des images (66, 68) de la zone d'émission de lumière (62, 64) de ladite au moins une source de lumière (42, 43, 72, 74) à polarisation désadaptée sont transmises optiquement de manière séparée à l'unité de masque (28) par l'intermédiaire d'un élément optique biréfringent (78) suivi d'un élément rotateur de polarisation (52) sur le chemin de faisceau entre l'unité optique (16, 36) et ladite au moins une unité de masque (28), l'unité de masque (28) comportant au moins un polariseur (56) suivi d'un masque dynamique (12), suivi d'un analyseur (58), un élément à retard (54) étant notamment agencé entre l'unité optique (16, 36) et l'élément optique biréfringent (78) et/ou l'élément optique diffractant (80).

16. Procédé selon la revendication 14 ou 15, dans lequel des images (66, 68) de la zone d'émission de lumière (62, 64) de ladite au moins une source de lumière (42, 43, 72, 74) ayant des polarisations circulaires différentes sont retransmises optiquement de manière séparée à l'unité de masque (28) par l'intermédiaire d'un élément à retard (54) agencé entre l'unité optique (16, 36) et l'élément optique biréfringent (78) et/ou l'élément optique diffractant (80).

17. Procédé selon l'une quelconque des revendications 12 à 16, dans lequel au moins deux masques dynamiques (12, 14) de ladite au moins une unité de masque (28) sont commutés séparément l'un de l'autre à un état au moins partiellement transmissif pour des signaux optiques (24, 26) provenant d'au moins deux sources de lumière (42, 43, 72, 74), les signaux optiques (24, 26) provenant desdites au moins deux sources de lumière (42, 43, 72, 74) étant notamment commandés séquentiellement, notamment

lesdites au moins deux sources de lumière (42, 43, 72, 74) étant localisées simultanément par l'unité de localisation (20), notamment une caméra (22).

18. Procédé selon la revendication 17, dans lequel une séparation spectrale des signaux optiques (24, 26) de ladite au moins une source de lumière (42, 43, 72, 74) s'effectue par l'intermédiaire d'au moins une autre unité optique (18, 38) sur le chemin de faisceau avant ledit au moins un masque dynamique (12) et/ou après ledit au moins un masque dynamique (12) ou entre au moins deux masques dynamiques (12, 14),

une séparation spectrale des signaux optiques (24, 26) de ladite au moins une source de lumière (42, 43, 72, 74) s'effectuant notamment par l'intermédiaire d'au moins un élément optique dispersif (86) entre deux éléments optiques diffractants ou réfractants (82) de l'unité optique (18, 38), l'image (66, 68) de la zone d'émission de lumière (62, 64) de ladite au moins une source de lumière (42, 43, 72, 74) étant formée de manière spectralement résolue sur le second masque dynamique (14).

19. Procédé selon l'une quelconque des revendications 12 à 18, dans lequel les signaux optiques (24, 26) provenant de ladite au moins une source de lumière (42, 43, 72, 74) sont émis de manière spatialement résolue et/ou

dans lequel les signaux optiques (24, 26) provenant de ladite au moins une source de lumière (42, 43, 72, 74) sont évalués dans un système de traitement de données (50), et sont notamment affichés sur un système de réalité virtuelle et/ou augmentée (60) et/ou

dans lequel les signaux optiques (24, 26) provenant de ladite au moins une source de lumière (42, 43, 72, 74) sont traités et/ou affichés au moyen d'au moins un identifiant.

100

20

16

50

12

18

60

10

Fig. 1

Fig. 2

Fig. 3

Fig. 4

100

30,64,72    36         32,28      38        26        10,44

48,69

69

84

Fig. 5

100

39,40              26,76              10,44,28

30,40,64,74

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010031629 B4
- DE 102017130903

- WO 2006125975 A

**In der Beschreibung aufgeführte Nicht-Patentliteratur**

- *Infrared Data Association Serial Infrared Physical Layer Specification*, 30 May 2001, https://www.irda. org/standards/pubs/IrPHY_1p4.pdf